(19) Europäisches Patentamt
European Patent Office
Office européen des brevets

(11) EP 1 611 205 B1

(12) # EUROPÄISCHE PATENTSCHRIFT

(45) Veröffentlichungstag und Bekanntmachung des Hinweises auf die Patenterteilung:
**19.11.2008 Patentblatt 2008/47**

(21) Anmeldenummer: **04722543.8**

(22) Anmeldetag: **23.03.2004**

(51) Int Cl.:
***C08L 87/00*** (2006.01) ***C08L 67/02*** (2006.01)
***C08L 67/04*** (2006.01) ***C08G 18/42*** (2006.01)
***C08G 63/91*** (2006.01) ***C08G 63/08*** (2006.01)
***C08L 53/00*** (2006.01)

(86) Internationale Anmeldenummer:
**PCT/EP2004/003066**

(87) Internationale Veröffentlichungsnummer:
**WO 2004/090042 (21.10.2004 Gazette 2004/43)**

(54) **BLENDS MIT FORM-GEDÄCHTNIS-EIGENSCHAFTEN**
BLENDS WITH SHAPE MEMORY CHARACTERISTICS
MELANGES A MEMOIRE DE FORME

(84) Benannte Vertragsstaaten:
**AT BE BG CH CY CZ DE DK EE ES FI FR GB GR HU IE IT LI LU MC NL PL PT RO SE SI SK TR**

(30) Priorität: **10.04.2003 DE 10316573**

(43) Veröffentlichungstag der Anmeldung:
**04.01.2006 Patentblatt 2006/01**

(73) Patentinhaber: **Mnemoscience GmbH**
**52531 Uebach-Palenberg (DE)**

(72) Erfinder:
- **LENDLEIN, Andreas**
**14167 Berlin (DE)**
- **RIDDER, Ute**
**52072 Aachen (DE)**

(74) Vertreter: **Grünecker, Kinkeldey, Stockmair & Schwanhäusser Anwaltssozietät**
**Leopoldstraße 4**
**80802 München (DE)**

(56) Entgegenhaltungen:
**EP-A- 0 344 912** **US-A- 5 446 109**
**US-A- 5 506 300** **US-A- 5 665 831**
**US-B1- 6 388 043**

- **DATABASE COMPENDEX [Online] ENGINEERING INFORMATION, INC., NEW YORK, NY, US; Mai 1996 (1996-05), NEUENSCHWANDER P ET AL: "Cell- and tissue-compatible implant materials/synthesis" XP002288361 Database accession no. EIX97043434106 & TRANS ANNU MEET SOC BIOMATER INT BIOMATER SYMP; TRANSACTIONS OF THE ANNUAL MEETING OF THE SOCIETY FOR BIOMATERIALS IN CONJUNCTION WITH THE INTERNATIONAL BIOMATERIALS SYMPOSIUM 1996 SOC FOR BIOMATERIALS, ST. LOUIS PARK, MN, USA, Bd. 2, 1996, Seite 403,**
- **OHKI T ET AL: "Mechanical and shape memory behavior of composites with shape memory polymer" COMPOSITES PART A: APPLIED SCIENCE AND MANUFACTURING, ELSEVIER SCIENCE PUBLISHERS B.V., AMSTERDAM, NL, Bd. 35, Nr. 9, September 2004 (2004-09), Seiten 1065-1073, XP004515337 ISSN: 1359-835X**
- **DATABASE WPI Section Ch, Week 200268 Derwent Publications Ltd., London, GB; Class A23, AN 2002-633362 XP002288362 & KR 2002 014 054 A (ULSAN IND EDUCATION FOUND) 25. Februar 2002 (2002-02-25)**
- **DATABASE WPI Section Ch, Week 199233 Derwent Publications Ltd., London, GB; Class A23, AN 1992-273010 XP002288363 & JP 04 185772 A (TORAY IND INC) 2. Juli 1992 (1992-07-02)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 611 205 B1

- **DATABASE WPI Section Ch, Week 199044 Derwent Publications Ltd., London, GB; Class A28, AN 1990-332285 XP002288364 & JP 02 239930 A (TORAY IND INC) 21. September 1990 (1990-09-21)**
- **DATABASE WPI Section Ch, Week 198835 Derwent Publications Ltd., London, GB; Class A12, AN 1988-246781 XP002288365 & JP 63 179956 A (ASAHI CHEM IND CO LTD) 23. Juli 1988 (1988-07-23)**
- **DATABASE WPI Section Ch, Week 199044 Derwent Publications Ltd., London, GB; Class A23, AN 1990-332399 XP002288366 & JP 02 240135 A (TORAY IND INC) 25. September 1990 (1990-09-25)**

## Beschreibung

Die vorliegende Erfindung betrifft Blends mit Form-Gedächtnis-Eigenschaften, die vorzugsweise biologisch abbaubar sind, Blockcopolymere, geeignet zur Herstellung solcher Blends, Verfahren zur Herstellung der Blockcopolymere sowie zur Herstellung der Blends und Verwendungen der oben genannten Produkte.

STAND DER TECHNIK

Die Nachfrage nach maßgeschneiderten Hochleistungspolymeren mit einem breiten Eigenschaftsprofl nimmt stetig zu. Daher wird nach immer neuen Wegen gesucht, diese Polymere möglichst kostengünstig herzustellen. Eine Möglichkeit Polymere mit maßgeschneiderten Eigenschaften zu erhalten, liegt in der Synthese neuer Monomere und deren Polymerisation zu Homo- oder Copolymeren sowie der Entwicklung neuer Polymerisationverfahren. Derartige Entwicklungen sind jedoch mit einem hohen Kosten- und Zeitaufwand verbunden, so dass diese nur rentabel sind, wenn die erforderlichen Eigenschaften nicht auf anderem Weg erzielt werden können und ein hoher Absatz für neu entwickelte Polymere zu erwarten ist.

Auf Grund der gestiegenen Anwendungsmengen von Kunststoffen in Wachstumsbereichen, scheint es ökonomisch sinnvoll, die neuen Anforderungen an Polymere durch Kombination vorhandener Polymere zu erreichen, bzw. neue, vergleichsweise einfache Polymere zu entwickeln, die in Kombination mit weiteren Polymeren ein gefordertes Anforderungsprofil erfüllen.

Wichtig bei der Herstellung von Polymermischungen ist jedoch, dass, insbesondere zum Erreichen eines einheitlichen und reproduzierbaren Eigenschaftsprofil, eine möglichst gute und einfache Durchmischung der verschiedenen Polymere in der Mischung (Blend) sichergestellt sein muss.

Eine wichtige Klasse an neuartigen Polymersystemen, die in letzter Zeit sehr viel Aufmerksamkeit erfahren haben, sind die sogenannten Form-Gedächtnis-Polymere (im folgenden auch SMP-Polymere oder SMP-Materialien), wobei es sich um Werkstoffe handelt, die durch einen externen Stimulus ihre äußere Form ändem können. Üblicherweise wird dabei durch eine Kombination aus der Polymermorphologie mit der Verarbeitungs- und Programmierungsmethode ein Form-Gedächtnis-Effekt (Shape Memory Effekt) ermöglicht. Dabei wird üblicherweise mittels konventioneller Verarbeitungsmethoden das Material durch Aufschmelzen über den höchsten thermischen Übergang $T_{PERM}$ in die permanente Form gebracht. Der Grundstoff kann durch Aufheizen über die Schalltemperatur $T_{TRANS}$ deformiert und in diesem Zustand, durch Abkühlen auf eine Temperatur von unterhalb $T_{TRANS}$ fixiert werden. So erhält man temporäre Form. Dieser Vorgang wird Programmierung genannt (siehe Figur 1). Durch eine externen Stimulus, üblicherweise eine Temperaturänderung, kann die Wiederherstellung der permanenten Form erreicht werden. Handelt es sich bei dem Stimulus um eine Temperaturänderung, so spricht man von einem thermisch induzierten Form-Gedächtnis-Effekt (Figur 2).

Form-Gedächtnis-Polymere müssen über zwei separate Phasen mit unterschiedlichen Temperaturübergängen verfügen. Dabei bestimmt die Phase mit dem höchsten Temperaturübergang $T_{PERM}$ die permanente Form und die Phase mit dem niedrigeren Temperaturübergang die sogenannte Schalttemperatur des Form-Gedächtnis-Effekts $T_{TRANS}$. In den letzten Jahren hat eine gezielte Entwicklung von Formgedächtnispolymeren begonnen. Zunehmend wird über lineare, phasensegregierte Multiblockcopolymere, meist Polyurethansysteme, unter dem Oberbegriff Form-Gedächtnis-Polymer berichtet. Diese Materialien, die üblicherweise elastisch sind, verfügen über eine Phase mit hoher Über gangstemperatur $T_{PERM}$ (Hartsegment bildende Phase), die als physikalischer Vernetzer wirkt und die permanente Form bestimmt. Die physikalische Vernetzung erfolgt üblicherweise durch Kristallisation einzelner Polymersegmente oder durch Erstarrung amorpher Bereiche. Diese physikalische Vernetzung ist thermisch reversibel, oberhalb von $T_{PERM}$ sind solche Materialien thermoplastisch verarbeitbar. Es handelt sich um thermoplastische Elastomere. Als Schaltsegment dient eine zweite Phase, die über eine niedrigere Übergangstemperatur verfügt. Dieser Übergang kann sowohl eine Glasübergangstemperatur (Tg) oder auch ein Schmelzübergang (Tm) sein. Im Fall der Blockcopolymere sind die beiden verschiedenen Phasen bildenden Segmente chemisch kovalent miteinander verknüpft.

Aus der WO 99/42147 sind verschiedene Form-Gedächtnis-Polymere bekannt. Diese Offenlegungsschrift beschreibt auch Mischungen aus zwei thermoplastischen SMP-Materialien. Eine ähnliche Offenbarung liegt auch in der WO 99/42528 vor. Die US 6,388,043 B1 offenbart Form-Gedächtnis-Polymere und Mischungen derartiger Materialien.

Die JP-A-11-209595 beschreibt eine Polymerzusammensetzung, die bioabbaubar ist und schmelzformbar ist und Form-Gedächtnis-Eigenschaften aufweist. Diese Polymerzusammensetzung umfasst eine Polymermischung, hauptsächlich enthaltend Polylactid und Polyepsiloncaprolacton.

Die JP-A-2-123129 offenbart eine thermoplastische Zusammensetzung, die im geschmolzenen Zustand formbar ist und Form-Gedächtnis-Eigenschaft aufweist. Diese Zusammensetzung umfasst einen aromatischen Polyester und ein aliphatisches Polylacton.

Die EP-A-1000958 offenbart ein bioabbaubares Form-Gedächtnis-Material, basierend auf einem Lactidpolymer.

Aus der WO 01/07499 sind Form-Gedächtnis-Polyurethane bekannt, die auch in der Form von Mischungen

eingesetzt werden können.

Die JP-A-04-342762 offenbart Form-Gedächtnis-Zusammensetzungen mit verbesserten Eigenschaften im Hinblick auf Färbung und Handhabbarkeit, wobei diese Zusammensetzungen mindestens ein Form-Gedächtnis-Polymer aufweisen.

In Thermochimica Acta 243(2), 253 (1994) werden zwei lösungsbasierende Form-Gedächtnis-Polymere untersucht. Dabei wurden auch Polymermischungen untersucht

Der Nachteil der oben genannten bekannten Form-Gedächtnis-Materialien ist allerdings, dass auch bei Polymermischungen der Form-Gedächtnis-Effekt nur durch den Einsatz eines Polymeren mit Form-Gedächtnis-Eigenschaften sichergestellt werden kann. Solche speziellen Polymere erfordern jedoch einen großen Aufwand bei der Herstellung und es ist nicht sichergestellt, dass für ein Polymersystem bei allen denkbaren Mischungsverhältnissen tatsächlich ein Form-Gedächtnis-Effekt auftritt.

## AUFGABE DER ERFINDUNG

Ausgehend von den oben dargestellten Nachteilen ist es die Aufgabe der vorliegenden Erfindung eine Mischung mit Form-Gedächtnis-Eigenschaften anzugeben, wobei die der Mischung zugrunde liegenden Polymere selbst keine Form-Gedächtnis-Materialien sein müssen. Darüber hinaus sollte die Mischung bevorzugt bioabbaubar sein.

## KURZE BESCHREIBUNG DER ERFINDUNG

Die oben genannte Aufgabe wird durch die Polymermischung nach Anspruch 1 gelöst. Bevorzugte Ausführungsformen sind in den Unteransprüchen angegeben. Darüber hinaus stellt die vorliegende Erfindung. Verfahren zur Herstellung der Mischung und Verwendungen der Mischungen. Zur Verfügung, wie in Ansprüchen 7 ud 8 definiert. Bevorzugte Ausführungsformen dieser Aspekte der vorliegenden Erfindung sind in der nach folgenden Beschreibung angegeben.

## KURZE BESCHREIBUNG DER FIGUREN

Figur 1 stellt schematisch den Form-Gedächtnis-Effekt dar. Figur 2 zeigt schematisch einen Temperatur induzierten Form-Gedächtnis-Effekt. Figur 3 zeigt schematisch eine Polymermischung in Übereinstimmung mit der vorliegenden Erfindung.

## DETAILLIERTE BESCHREIBUNG DER ERFINDUNG

Die vorliegende Erfindung stellt also eine Mischung aus zwei unterschiedlichen Blockcopolymeren zur Verfügung, wobei die Mischung Form-Gedächtnis-Eigenschaften zeigt. Die beiden Blockcopolymere umfassen jeweils mindestens ein Hartsegment und mindestens ein Weichsegment. Beide Segmente werden vorzugsweise aus der Gruppe der durch Esterbindungen verknüpften Segmente ausgewählt, wobei auch Esterethersegmente erfindungsgemäß bevorzugt sind. Bevorzugt sind die jeweiligen Segmente ausgewählt aus nicht aromatischen Segmenten, Erfindungsgemäß zeigen die einzusetzenden Blockcopolymere selbst keine Form-Gedächtnis-Eigenschaften, sondern lediglich die Mischung.

Die in der erfindungsgemäßen Mischung eingesetzten Blockcopolymere sind so ausgewählt, dass die jeweiligen Weichsegmente identisch sind, so dass sich die Blockcopolymere lediglich im Hinblick auf die Hartsegmente unterscheiden. So lassen sich gute Mischbarkeit und zufriedenstellende Form-Gedächtnis-Eigenschaften sicherstellen.

Erfindungsgemäß sind die Hartsegmente ausgewählt unter Segmenten, die kristallin oder teilkristallin sind, während die Weichsegmente unter amorphen Segmenten ausgewählt sind.

Prinzipiell können sowohl das Hartsegment als auch das Weichsegment in der Form von Homopolymersegmenten vorliegen oder in der Form von Copolymersegmenten. Bevorzugt ist jedoch das Weichsegment ausgewählt unter Copolymersegmenten.

Prinzipiell können die beiden erfindungswesentlichen Blockcopolymere in beliebigen Mischungsverhältnissen vorliegen, es hat sich jedoch gezeigt, dass zufriedenstellende Form-Gedächtnis-Eigenschaften erhalten werden, wenn die beiden Blockcopolymere in der Mischung in einem Anteil von 10 : 1 bis 1 : 10 vorliegen.

Die in der erfindungsgemäßen Mischung einzusetzenden Blockcopolymere werden insbesondere bevorzugt ausgewählt unter Blockcopolymeren, deren Hartsegmente ausgewählt werden unter Poly-p-dioxanon und Poly-epsilon-caprolacton und deren Weichsegmente ausgewählt werden unter Copoly-epsilon-caprolacton-glykolid und einem Polyester- oder Polyetherestersegment aus einer aliphatischen Dicarbonsäure und einem aliphatischen Diol, bevorzugt Polyalkylenadipinat.

Die einzelnen Segmente liegen bevorzugt in den Blockcopolymeren so vor, dass sie durch Urethanbindungen

miteinander verknüpft sind. Derartige Blockcopolymere lassen sich beispielsweise aus entsprechenden diolfunktionalisierten Makromonomeren (d. h. den Segmenten entsprechenden Vorläufersubstanzen) herstellen, wenn diese Makromonomere in der Form von Diolen vorliegen, so dass durch die Umsetzung mit einem Isocyanat ein Blockcopolymer mit Urethanbindungen erhalten werden kann. Prinzipiell kann dabei jedes übliche Isocyanat eingesetzt werden, bevorzugt ist jedoch das Isocyanat Trimethylhexamethylendiisocyanat.

Die Molgewichte der jeweiligen Blockcopolymere sowie deren Polydispersitäten sind nicht kritisch, so lange hochpolymere Verbindungen vorliegen. Übliche Molgewichte liegen im Bereich von 7.500 bis 250.000 (Zahlenmittel des Molekulargewichts), wobei Molekulargewichte von 10.000 bis 150.000 und insbesondere von 20.000 bis 80.000 (Zahlenmittel des Molekulargewichts) bevorzugt sind. Die einzelnen Segmente innerhalb der Blockcopolymere weisen dabei bevorzugt Molekulargewichte im Bereich von 1.000 bis 20.000 (Zahlenmittel der Segmente) und insbesondere im Bereich von 2.000 bis 10.000 (Zahlenmittel des Molekulargewichts) auf.

Die Polydispersitäten der Blockcopolymere liegen bevorzugt im Bereich von 1,5 bis 5, und insbesondere bevorzugt im Bereich von 2 bis 4, wobei diese Werte sich als nicht besonders kritisch für die Herstellung von Mischungen mit Form-Gedächtnis-Eigenschaften erwiesen haben.

Weitere Ausführungen zu Molgewichten der Segmente und der Blockcopolymere werden weiter unten noch einmal im Hinblick auf besonders bevorzugte Blockcopolymere gemacht. Die dort angeführten Werte, die jeweils einzelne Blockcopolymere betreffen, gelten auch entsprechend für die erfindungsgemäßen Mischungen.

Die erfindungsgemäßen Mischungen, in ihrer bevorzugten Ausgestaltung, d. h. insbesondere wenn nicht aromatische Estersegmente und/oder Esterethersegmente vorliegen, zeigen eine ausgezeichnete Bioverträglichkeit und Bioabbaubarkeit, so dass insbesondere ein Einsatz im medizinischen Bereich denkbar ist, beispielsweise in der Form von Implantatmaterial, im Bereich Tissue Engineering, als Nervengeweberegenerationsunterstützungsmaterial oder als Hautersatzmaterial.

Die erfindungsgemäßen Mischungen weisen darüber hinaus eine Übergangstemperatur für den Form-Gedächtnis-Effekt auf, die im Bereich der Körpertemperatur liegt, so dass auch aus diesem Grund die erfindungsgemäßen Materialien insbesondere geeignet zum Einsatz im medizinischen Bereich sind.

Die erfindungsgemäßen Mischungen können neben den erfindungswesentlichen Blockcopolymeren noch weiter Bestandteile aufweisen, die die Eigenschaften der erfindungsgemäßen Mischungen nicht nachteilig beeinflussen und im jeweiligen Einsatzbereich sinnvoll bzw. notwendig sind. Die hier angeführten zusätzlichen Bestandteile können auch bei einer Verwendung der erfindungsgemäßen Blockcopolymere eingesetzt werden, je nach den Erfordernissen des Einsatzbereichs. Derartige zusätzliche Bestandteile sind z. B. medizinisch/pharmazeutisch wirksame Materialien, Additive zur weiteren Modifikation der physikalischen Eigenschaften oder Hilfsstoffe, wie Farbmittel oder Füllstoffe usw.

Im folgenden werden einige bevorzugte spezielle Blockcopolymere beschrieben, die zur Herstellung der erfindungsgemäßen Mischung geeignet sind.

Wie bereits oben ausgeführt, werden die Hartsegmente der erfindungsgemäßen Blockcopolymere bevorzugt ausgewählt unter Poly-p-dioxanon und Poly-epsilon-caprolacton. Die Weichsegmente werden bevorzugt ausgewählt unter Copoly-epsilon-caprolacton-glykolid sowie einem Polyester- oder Polyetherestersegment aus einer aliphatischen Dicarbonsäure und einem aliphatischen Diol, bevorzugt Polyalkylenadipinat. Die Alkylenkomponente im Polyalkylenadipinat ist bevorzugt ausgewählt unter Ethylen, Butylen und Diethylen, so dass dieses Weichsegment erhalten werden kann durch die Umsetzung von Adipinsäure oder eines geeigneten Derivats davon mit den Diolen Ethylenglykol, Butylenglykol und Diethylenglykol. Die vorstehend genannten Diole können entweder einzeln oder auch in einer beliebigen Mischung eingesetzt werden.

<u>**Hartsegment aus Poly-p-dioxanon**</u>

Das Hartsegment aus Poly-p-dioxanon, das erfindungsgemäß in den Blockcopolymeren eingesetzt werden kann, weist bevorzugt ein Molgewicht von 1.500 bis 5.000 auf, insbesondere bevorzugt von 2.500 bis 4.000. Eine besonders bevorzugte Ausführungsform dieses Hartsegments weist die folgende schematische Formel auf, wobei n und m jeweils so gewählt sind, dass die oben genannten Molgewichte (Zahlenmittel) erreicht werden, wobei der jeweilige Anteil vom Herstellungsverfahren abhängt.

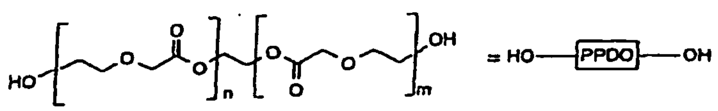

**Hartsegment aus Poly-epsilon-caprolacton**

Ein weiteres erfindungsgemäß bevorzugtes Hartsegment ist ein Poly-epsilon-caprolacton, mit einem Zahlenmittel des Molekulargewichts von 1.000 bis 20.000, bevorzugt 1.200 bis 12.000 und insbesondere bevorzugt 1.250 bis 10.000. Dieses Hartsegment weist, in Abhängigkeit vom Molekulargewicht, eine Schmelztemperatur von 35° bis 54° C auf. Dieses Hartsegment kann schematisch durch die folgende Formel dargestellt werden, wobei n und m wiederum die jeweiligen Anteile darstellen, notwendig zum Erreichen der oben genannten Molekulargewichte.

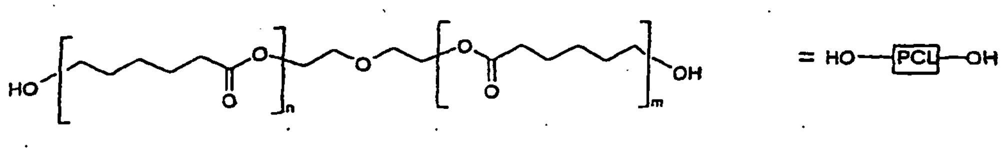

Beide Hartsegmente liegen bevorzugt, vor Herstellung des Blockcopolymers, in der Form von Diolen vor, so dass durch eine Umsetzung mit einem Isocyanat ein Polyurethan erhalten werden kann.

**Weichsegment aus Poly-epsilon-caprolacton-glykolid**

Dieses amorphe, nicht kristallisierbare Weichsegment hat bevorzugt ein Molekulargewicht von 1.000 bis 5.000 insbesondere bevorzugt von 2.000 bis 3.000 (Zahlenmittel des Molekulargewichts). Schematisch kann dieses Weichsegment durch die folgende Formel dargestellt werden, wobei insbesondere ein Poly-epsilon-caprolacton-ran-glykolid bevorzugt ist. Auch dieses Segment liegt bevorzugt vor der Herstellung der Blockcopolymere in der Form eines Diols vor, so dass durch die oben genannte Umsetzung mit einem Isocyanat eine Polyurethanerzeugung möglich ist.

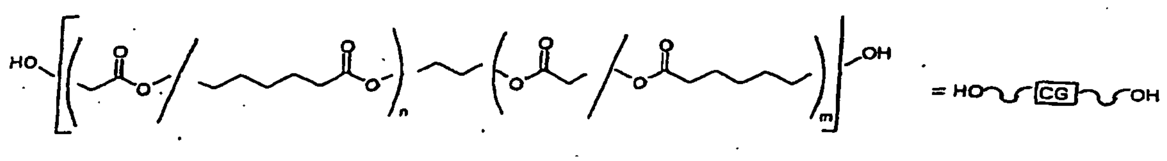

**Weichsegment aus Dicarbonsäure und Diol, bevorzugt Polyalkylenadipinat**

Dieses Weichsegment umfasst ein Kondensationsprodukt aus einer aliphatischen Dicarbonsäure und einem aliphatischen Diol. Die Dicarbonsäurekomponente weist bevorzugt 2 bis 8 Kohlenstoffatome auf und kann neben den beiden Carboxylgruppen noch weitere Substituenten aufweisen, wie Halogenatome oder Hydroxylgruppen, oder eine Doppel- oder Dreifachbindung in der Kette, was eine spätere weitere Modifikation der Blockcopolymere ermöglichen könnte. Repräsentative Beispiele solcher Dicarbonsäuren, die einzeln oder in Kombination eingesetzt werden können, umfassen Adipinsäure, Glucarsäure, Bernsteinsäure, Oxalsäure, Malonsäure, Pimelinsäure, Maleinsäure, Fumarsäure und Acetylendicarbonsäure, wobei Adipinsäure bevorzugt ist. Die Diolkomponente umfasst bevorzugt 2 bis 8 Kohlenstoffatome und wird bevorzugt ausgewählt aus Glokolen mit gerader Kohlenstoffatomanzahl, insbesondere bevorzugt unter Ethylenglykol, Butylenglykol und Diethylenglykol. Diese Diole liegen bevorzugt in Mischung vor, wobei eine Mischung aus den drei letztgenannten Diolen insbesondere bevorzugt ist.

Die besonders bevorzugte Ausführungsform dieses Weichsegments kann durch die folgende Formel dargestellt werden und ist ein Polyetherester aus Adipinsäure und den oben genannten Diolen. Auch dieses Weichsegment weist bevorzugt terminale Hydroxylgruppen auf, so dass durch eine Umsetzung mit einem Isocyanat eine Polyurethanbildung möglich ist. Dieses Segment hat bevorzugt ein Molekulargewicht von 500 bis 5.000, insbesondere bevorzugt von 1.000 bis 2.000 (Zahlenmittel des Molekulargewichts). Die Glasübergangstemperatur variiert dabei von ca. -61° bis -55° C mit steigender Molmasse. Kommerziell ist ein besonders bevorzugtes Weichsegment unter der Bezeichnung Diorez ® erhältlich (im folgenden PADOH), was ein Polyetheresterdiol aus Adipinsäure, Ethylenglykol, Butylenglykol und Diethylenglykol ist und durch die folgende schematische Formel dargestellt werden kann.

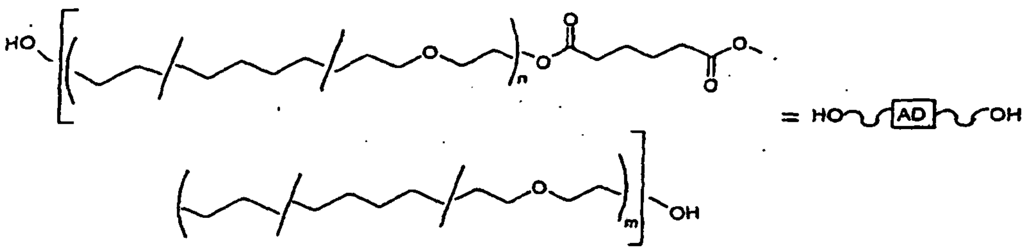

Die oben genannten Hart- und Weichsegmente lassen sich zu Blockcopolymeren verbinden, wobei bevorzugt ein Isocyanat, insbesondere bevorzugt Trimethylhexamethylendiisocyanat (Isomerengemisch) verwendet wird. Die Reaktion kann in üblicher Art und Weise ablaufen, wobei allerdings auf eine äquimolare Ansatzmenge geachtet werden muss, insbesondere um ausreichen hohe Molekulargewichte zu erhalten.

## Blockcopolymere

Die Benennung der Blockcopolymere im folgenden basiert auf den nachstehend angegebenen Abkürzungen:

### Hartsegmente

| | |
|---|---|
| Poly-p-dioxanon: | PPDO |
| Poly-epsilon-caprolacton: | PCL |

### Weichsegmente

| | |
|---|---|
| Poly-epsilon-caprolacton-glykolid: | CG |
| Polyalkylenadipinat: | AD |

Die Blockcopolymere aus PPDO und CG werden daher im folgenden PDCG, die Blockcopolymere aus PPDO und AD werden im folgenden PDA genannt, die Blockcopolymere aus PCL und AD werden im folgenden PCA genannt und die Blockcopolymere aus PCL und CG werden im folgenden PCCG genannt. Diese Blockcopolymere eignen sich insbesondere zur Herstellung der erfindungsgemäßen Polymermischungen, wobei insbesondere Mischungen aus PDA und PCA bevorzugt sind.

Diese vier Kombinationen an Hart- bzw. Weichsegmenten stellen erfindungsgemäß einsetzbare Blockcopolymere dar, wobei für diese Blockcopolymere die oben angeführten allgemeinen Aussagen zu Polydispersitäten und Molekulargewichten gelten. Für die einzelnen Blockcopolymere können jedoch noch speziellere bevorzugte Bereiche genannt werden.

PDCG: Polydispersitäten bevorzugt von 1,5 bis 5, stärker bevorzugt von 1,7 bis 4,5. Zahlenmittel des Molekulargewichts bevorzugt von 8.000 bis 60.000, stärker bevorzugt von 10.000 bis 50.000.

PCA: Polydispersitäten bevorzugt von 1,5 bis 8, stärker bevorzugt von 1,7 bis 4. Zahlenmittel des Molekulargewichts bevorzugt von 20.000 bis 150.000, stärker bevorzugt von 25.000 bis 110.000.

PDA: Polydispersität bevorzugt von 2 bis 4, stärker bevorzugt von 2,5 bis 3,6. Zahlenmittel des Molekulargewichts bevorzugt von 10.000 bis 50.000, stärker bevorzugt von 20.000 bis 35.000.

Bei den Blockcopolymeren liegt der Anteil an Hartsegment im Blockcopolymer bevorzugt im Bereich von 25 bis 75 Gew.-%, stärker bevorzugt im Bereich von 25 bis 60 Gew.-% für PDCG, im Bereich von 35 bis 70 Gew.-% für PDA und bevorzugt im Bereich von 30 bis 75 Gew.-% für PCA.

Die Blockcopolymere sind thermoplastische Materialien, die, obwohl sie selbst keine Form-Gedächtnis-Eigenschaften aufweisen, in Mischung miteinander überraschenderweise Form-Gedächtnis-Eigenschaften zeigen.

Die Blockcopolymere weisen eine gute Gewebeverträglichkeit auf und sind in physiologischer Umgebung abbaubar, wobei keine toxischen Abbauprodukte entstehen. Die thermoplastische Verarbeitbarkeit ermöglicht es weiterhin, die Materialien zu Fäden zu verspinnen, die gegebenenfalls anschließend verstrickt werden können. Zum einen erhält man somit Filamente, die beispielsweise als Nahtmaterial von Interesse sind, andererseits dreidimensionale Gerüste, die als Träger im Bereich Tissue Engineering von Interesse sind.

Besonders geeignet sind die Blockcopolymere zur Herstellung der erfindungsgemäßen Mischungen, die Form-Gedächtnis-Eigenschaflen aufweisen. Dabei werden die jeweiligen Blockcopolymere in Übereinstimmung mit den oben genannten Kriterien ausgewählt. Die Mischungen zeigen dann einen Form-Gedächtnis-Effekt, der wie folgt erklärbar ist

Die erfindungsgemäße Mischung umfasst zwei Blockcopolymere, die sich im Hinblick auf die Hartsegmente unterscheiden aber im Hinblick auf die Weichsegmente identisch sind. Die Schmelztemperatur eines Hartsegments bildet den höchsten thermischen Übergang und liegt über der Gebrauchstemperatur, während der Glasübergang des amorphen Weichsegments unterhalb dieser Temperatur liegt. Unterhalb des Schmelzbereichs des erstgenannten Hartsegments liegen mindestens zwei Phasen vor. Kristalline Domänen des Hartsegments beeinflussen die mechanische Festigkeit, während kautschuk-elastische Bereiche des amorphen Weichsegments die Elastizität bestimmen. Somit vereinen die erfindungsgemäßen Mischungen gute elastische Eigenschaften mit guter mechanischer Festigkeit.

Die permanente Form der Polymermischung zweier Blockcopolymere, die im folgenden A und B genannt werden (Figur 3), resultiert aus der thermisch reversiblen Vernetzung der Hartsegment bildenden Phase im Blockcopolymer A. Diese Phase zeichnet sich durch einen Schmelzübergang oberhalb der Schalttemperatur aus. Die Fixierung der temporären Form erfolgt durch die Kristallisation eines Schaltsegments, das die Hartsegment bildende Phase im Blockcopolymer B bildet. Der Schmelzübergang dieses Segments bestimmt $T_{TRANS}$ für den Form-Gedächtnis-Übergang. Das nicht kristallisiertiare Weichsegment der Blockcopolymere bildet in den Polymermischungen eine dritte, kautschukelastische Phase (Weichphase) und wird aus dem gleichen amorphen Segment gebildet. Dieses amorphe Segment trägt zum einen zur Mischbarkeit der Blockcopolymere und zum anderen zur Elastizität der Polymermischungen bei. Schematisch ist dieses Konzept in Figur 3 dargestellt.

Die die beiden Phasen bildenden Segmente, die die temporäre und permanente Form bestimmen, sind nicht kovalent miteinander verknüpft, da sie zu zwei unterschiedlichen Blockcopolymeren gehören. Eine Steuerung der Form-Gedächtnis-Eigenschaften sowie der mechanischen Eigenschaften kann durch Variation der Anteile der eingesetzten Multiblockcopolymere in der Mischung erzielt werden.

Die Herstellung der erfindungsgemäßen Polymermischungen kann in einer dem Fachmann bekannten Art und Weise erfolgen. Bevorzugt sind hier jedoch die Mischung im Extruder (Extrusionsvermischung) und die Mischung in gelöstem Zustand, wobei besonders gut durchmischte Polymermischungen erhalten werden können. Im Hinblick auf die Handhabbarkeit ist jedoch die Extrusionsvermischung bevorzugt, insbesondere da hierbei auch größere Mengen an Polymer verarbeitet werden können, ohne das auf potentiell risikobehaftete Lösungsmittel zurückgegriffen werden muss.

Die folgenden Beispiele erläutern die Erfindung weiter.

## BEISPIELE

Eine Gruppe potentiell biokompatibler, abbaubarer Materialien stellen Polymere aus den Makrodiolen PPDO und ran-CG dar. Die Homo-/Copolymere, die aus den gleichen Monomeren aufgebaut sind, sind als biokompatibel bekannt und werden bereits für medizinische Anwendungen eingesetzt. Als strukturelles Konzept dient das Modell der phasenseparierten Multiblockcopolymere mit einem teilkristallinen Hartsegment (PPDO), dessen Schmelztemperatur $T_m$ höher als die Gebrauchstemperatur $T_{use}$ ist, und einem amorphen Weichsegment (*ran*-CG) mit einer tiefen Glasübergangstemperatur $T_g$. Das kristallisierbare Diol beeinflusst die Festigkeit, und das nicht kristallisierbare, amorphe Diol bestimmt die Elastizität und die Eigenschaften des Polymers bei tiefen Temperaturen.

### Synthese und Zusammensetzung der Multiblockcopolymere

Zur Synthese von Multiblockcopolymeren des Typs PDCG aus den Makrodiolen PPDO ($M_n$ = 2800 g·mol$^{-1}$) und *ran*-CG ($M_n$ = 2500 g·mol$^{-1}$) bietet sich die Umsetzung mit einem Diisocyanat als Verknüpfungseinheit an (Gl. 4.1).

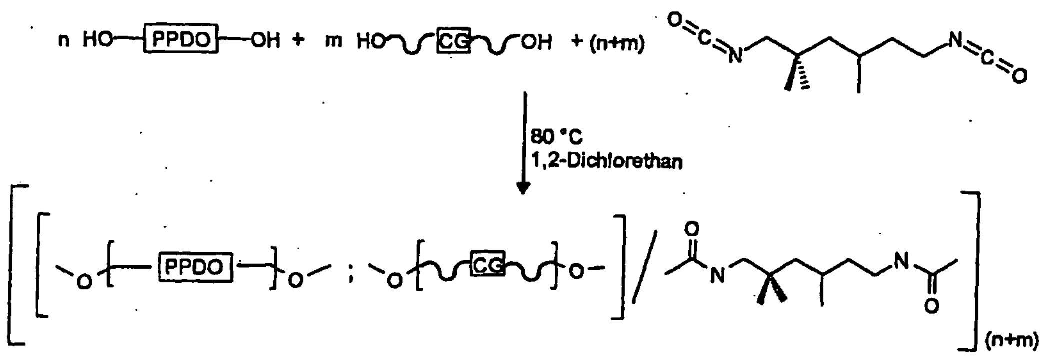


(4.1)

Um einen hohen Umsatz zu erzielen, muss auf den Einsatz von äquimolaren Anteilen der Edukte bezogen auf die Endgruppen geachtet werden. Für die Synthese des PDCG wird als Verknüpfungseinheit das aliphatische Isomerengemisch aus 2,2,4- und 2,4,4-Trimethylhexamethylendiisocyanat (TMDI) ausgewählt, da einerseits die Bildung von kristallinen Urethansegmenten verhindert wird und andererseits aliphatische Amine als Abbauprodukte eine geringere Toxizität aufweisen als aromatische Amine.

Die Umsetzung muss unter Feuchtigkeitsausschluss durchgeführt werden, da die Isocyanate mit Wasser zu Aminen reagieren, die zur unerwünschten Bildung von Harnstoffderivaten führen. Bei hoher Temperatur können Urethangruppen mit einem Isocyanat zu Allophanat und Harnstoffgruppen zu Biuret weiter reagieren. Diese Nebenreaktionen verändern die Zusammensetzung des Reaktionsgemisches durch den Verlust der Äquimolarität, was zu niedrigeren Reaktionsumsätzen führt.

Um den Einfluss des Hartsegmentanteils im Produkt auf die thermischen und mechanischen Eigenschaften sowie die hydrolytische Abbaugeschwindigkeit zu untersuchen, werden die Konzentrationen der Makrodiole bei der Synthese der Polymere variiert.

Die Zusammensetzung der hergestellten Polymere (Tab. 0.1) wird mittels $^1$H-NMR-Spektroskopie und die Molmasse mittels GPC ermittelt.

Tab. 0.1: Molmassen $M_n$ und $M_w$, Polydispersität PD, bestimmt mittels GPC (vgl. Kap.), und Zusammensetzung der PDCG-Polymere, bestimmt mittels $^1$H-NMR-Spektroskopie.

| Polymer | $\frac{M_n}{g \cdot mol^{-1}}$ | $\frac{M_w}{g \cdot mol^{-1}}$ | PD | $\frac{PPDO}{Gew.-\%}$ | $\frac{ran-CG}{Gew.-\%}$ | $\frac{TMDI}{Gew.-\%}$ |
|---|---|---|---|---|---|---|
| PDCG(28) | 21000 | 48400 | 2,30 | 28 | 64 | 8 |
| PDCG(30) | 19700 | 89300 | 4,53 | 30 | 59 | 11 |
| PDCG(43) | 26800 | 74600 | 2,78 | 43 | 50 | 7 |
| PDCG(52) | 11300 | 42400 | 3,75 | 52 | 40 | 8 |
| PDCG(55) | 45900 | 78200 | 1,70 | 55 | 35 | 10 |

Der ermittelte Anteil an Hartsegment variiert zwischen 28 Gew.-% und 55 Gew.-% und entspricht in etwa dem Anteil des eingesetzten PPDO im jeweiligen Reaktionsansatz. Es werden mittlere Molmassen $M_w$ von 42000 g·mol$^{-1}$ bis 89000 g·mol$^{-1}$ erreicht. Die teilweise erhöhten Werte der Polydispersität (bis 4,53) weisen auf Nebenreaktionen hin, die zur Verzweigung des Polymers führen.

Eine weitere Gruppe biokompatibler, abbaubarer Multiblockcopolymere stellen Multiblockcopolymere aus PPDO und PADOH dar. An die Synthese und Zusammensetzung der Polymere schließen sich die Vorstellung der thermischen und mechanischen Eigenschaften an. Abschließend werden die Ergebnisse des hydrolytischen Abbaus dieses Polymersystems vorgestellt.

**Synthese und Zusammensetzung der Polymere**

Für dieses Polymersystem wird PPDO mit einer Molmasse $M_n$ von 2800 g·mol$^{-1}$ als teilkristallines Hartsegment und ein Poly(alkylenglykoladipat)diol (PADOH, Diorez®, IV) als amorphes Weichsegment eingesetzt, als Verknüpfungseinheit findet TMDI als Isomerengemisch Verwendung. Poly(alkylenglykoladipat)diol besteht aus einer Kombination von

Adipinsäure und den Diolen Ethylenglykol, Butylenglykol und Diethylenglykol und ist als biokompatibel und degradierbar beschrieben. Die verwendeten mittleren Molmassen $M_n$ des eingesetzten PADOH betragen 1000 $g \cdot mol^{-1}$ (PADOH1000) bzw. 2000 $g \cdot mol^{-1}$ (PADOH2000).

Die Synthese der PDA-Polymere verläuft analog der oben beschriebenen Synthese der PDCG-Polymere. Im Hinblick auf kommerzielle Anwendungen und eine damit verbundene thermoplastische Verarbeitung ist es wichtig, die Polymere in größeren Mengen synthetisieren zu können. Dies konnte in Ansätzen bis 800 g realisiert werden.

Die mittels GPC bestimmten mittleren Molmassen der hergestellten Polymere und die mittels $^1H$-NMR-Spektroskopie bestimmte Zusammensetzung dieser Polymere, die PADOH mit einer Molmasse $M_n$ von 1000 $g \cdot mol^{-1}$ (PADOH1000) enthalten, sind in Tab. 0.2 aufgeführt.

Tab. 0.2: Molmassen $M_n$ und $M_w$ und Polydispersität PD, bestimmt mittels GPC (vgl. Kap.), und Zusammensetzung, bestimmt mittels $^1H$-NMR-Spektroskopie, der PDA-Polymer-Ansätze bis 800 g Produkt, die PADOH1000 als amorphes Weichsegment enthalten.

| Polymer | $\frac{M_n}{g \cdot mol^{-1}}$ | $\frac{M_w}{g \cdot mol^{-1}}$ | PD | $\frac{PPDO}{Gew.-\%}$ | $\frac{PADOH}{Gew.-\%}$ | $\frac{TMDI}{Gew.-\%}$ |
|---|---|---|---|---|---|---|
| PDA(42,1) | 32500 | 96600 | 2,97 | 42 | 45 | 13 |
| PDA(50,1) | 25000 | 66300 | 2,65 | 50 | 37 | 13 |
| PDA(64,1) | 23900 | 80200 | 3,36 | 64 | 24 | 12 |

Die erzielten Werte für $M_w$ liegen zwischen 66000 $g \cdot mol^{-1}$ und 97000 $g \cdot mol^{-1}$ bei einer Polydispersität zwischen 2,65 und 3,36. Der Gewichtsanteil des teilkristallinen Hartsegments beträgt 42 Gew.-%, 50 Gew.-% und 64 Gew.-%, der TMDI-Anteil liegt bei 13 Gew.-%. Bei den vorgestellten Ansätzen entspricht der Anteil an Hartsegment im resultierenden Polymer in etwa dem eingewogenem Anteil.

Zur Untersuchung des Einflusses der Kettenlänge des Weichsegments auf die thermischen und mechanischen Eigenschaften der Polymere werden zwei Polymere mit PADOH mit einer Molmasse $M_n$ von 2000 $g \cdot mol^{-1}$ (PADOH2000) synthetisiert. Die erzielten Molmassen und Zusammensetzungen sind in Tab. 0.3 dargestellt.

Tab. 0.3: Molmassen $M_n$ und $M_w$, Polydispersität PD, bestimmt mittels GPC, und Zusammensetzung der PDA-Polymere, bestimmt mittels $^1H$-NMR-Spektroskopie, mit PADOH2000 als amorphem Weichsegment.

| Polymer | $\frac{M_n}{g \cdot mol^{-1}}$ | $\frac{M_w}{g \cdot mol^{-1}}$ | PD | $\frac{PPDO}{Gew.-\%}$ | $\frac{PADOH}{Gew.-\%}$ | $\frac{TMDI}{Gew.-\%}$ |
|---|---|---|---|---|---|---|
| PDA(42,2) | 25900 | 77100 | 2,98 | 42 | 49 | 9 |
| PDA(66,2) | 23100 | 82200 | 3,56 | 66 | 25 | 9 |

Die erhaltenen Werte für $M_w$ liegen zwischen 77100 $g \cdot mol^{-1}$ und 82200 $g \cdot mol^{-1}$, die Polydispersität beträgt zwischen 2,98 und 3,56. Der Anteil an teilkristallinem Hartsegment liegt zwischen 42 Gew.-% bzw. 66 Gew.-% bei einem Anteil an TMDI von 9 Gew.-%. Die erhaltenen Anteile an Hartsegment im Polymer entsprechen im Rahmen der Fehlergrenzen den eingewogenen Verhältnissen.

Ein weiteres untersuchtes System sind Multiblockcopolymere aus Caprolacton und Alkylenglykaladipat. Als teilkristallines Hartsegment wird für dieses Polymersystem PCL mit verschiedenen Molmassen $M_n$ von 1250 $g \cdot mol^{-1}$, 2000 $g \cdot mol^{-1}$ und 10000 $g \cdot mol^{-1}$ eingesetzt. Als amorphes Weichsegment wird PADOH verwendet und als Verknüpfungseinheit findet TMDI Verwendung. Die Molmasse $M_n$ des Weichsegments beträgt 1000 $g \cdot mol^{-1}$ bzw. 2000 $g \cdot mol^{-1}$.

Die Synthese der PCA-Multiblockcopolymere verläuft analog zu den bisher vorgestellten Synthesen der PDCG-Polymere und der PDA-Polymere. Die Molmassen werden mittels GPC bestimmt und erreichen für $M_w$ Werte von 48800 $g \cdot mol^{-1}$ bis 177600 $g \cdot mol^{-1}$. Die Zusammensetzung der Polymere wird mittels $^1H$-NMR-Spektroskopie bestimmt (Tab. 0.).

Tab. 0.4: Molmassen $M_n$, $M_w$, Polydispersität PD bestimmt mittels GPC (vgl. Kap.) und Zusammensetzung der PCA-Polymere, bestimmt mittels $^1$H-NMR-Spoktroskopie, die PADOH1000 als amorphes Weichsegment und PCL unterschiedlicher Molmasse als Hartsegment enthalten.

| Polymer | $\frac{M_{nPCL}}{g \cdot mol^{-1}}$ | $\frac{M_n}{g \cdot mol^{-1}}$ | $\frac{M_w}{g \cdot mol^{-1}}$ | PD | $\frac{PCL}{Gew.-\%}$ | $\frac{PADOH}{Gew.-\%}$ | $\frac{TMDI}{Gew.-\%}$ |
|---|---|---|---|---|---|---|---|
| PCA (51,1250,1) | 1250 | 27900 | 48800 | 1,75 | 51 | 33 | 16 |
| PCA (32,2,1) | 2000 | 30500 | 64900 | 2,13 | 32 | 52 | 16 |
| PCA (50,2,1) | 2000 | 36900 | 96600 | 2,62 | 50 | 34 | 16 |
| PCA (72,2,1) | 2000 | 47400 | 177600 | 6,75 | 72 | 14 | 14 |
| PCA (51,10,1) | 10000 | 54100 | 143900 | 2,66 | 51 | 38 | 11 |
| PCA (52,10,1) | 10000 | 45200 | 99400 | 2,13 | 52 | 36 | 12 |
| PCA (59,10,1) | 10000 | 46400 | 82100 | 1,77 | 59 | 31 | 10 |
| PCA (72,10,1) | 10000 | 31800 | 100700 | 3,17 | 72 | 20 | 8 |

Die Polydispersität der Materialien liegt zwischen 1,75 und 6,75 und steigt mit zunehmender Molmasse. Der Anteil an teilkristallinem Segment reicht für eingesetztes PCL2000 von 32 Gew.-% bis 72 Gew.-%, während für eingesetztes PCL10000 ein Anteil von 51 Gew.-% bis 72 Gew.-% vorliegt. Für PCL1250, die niedrigste verwendete Molmasse des PCL, wird lediglich ein Polymer mit 51 Gew.-% teilkristallinen Segmenten synthetisiert, da dieses Material sehr wachsartig ist und für weitere Untersuchungen nicht geeignet erscheint. Alle Materialien werden in Ansätzen bis 100 g hergestellt. Im Hinblick auf eine kommerzielle Anwendung und eine damit verbundene thermoplastische Verarbeitung werden aus diesem System zwei Polymere, mit PCL2000 und PADOH1000 als Standarddiole, ausgewählt und in Ansätzen bis 600 g synthetisiert. Die Zusammensetzung und erzielten Molmassen der resultierenden Materialien sind in beschrieben. Die in diesen Makroansätzen erzielten Werte für $M_w$ sind höher als für die Mikroansätze und liegen bei 360000 $g \cdot mol^{-1}$ bis 375000 $g \cdot mol^{-1}$.

Tab. 0.5: Molmassen $M_n$ und $M_w$, Polydispersität PD bestimmt mittels GPC (vgl. Kap.) und Zusammensetzung der PCA-Polymer-Makroansätze mit PADOH1000 als amorphem Weichsegment und PCL2000 als teilkristallinem Hartsegment bestimmt mittels $^1$H-NMR-Spektroskopie.

| Polymer | $\frac{M_n}{g \cdot mol^{-1}}$ | $\frac{M_w}{g \cdot mol^{-1}}$ | PD | $\frac{PCL}{Gew.-\%}$ | $\frac{PADOH}{Gew.-\%}$ | $\frac{TMDI}{Gew.-\%}$ |
|---|---|---|---|---|---|---|
| PCA(47,2,1) | 102900 | 375200 | 3,65 | 47 | 38 | 15 |
| PCA(68,2,1) | 96700 | 359100 | 3,71 | 68 | 20 | 12 |

Der Gewichtsanteil an teilkristallinem Segment liegt bei 47 Gew.-% bzw. 68 Gew.-% mit einem PADOH1000-Anteil von 38 Gew.-% bzw. 20 Gew.-%, was etwa dem eingesetzten Verhältnis entspricht. Zur Untersuchung des Einflusses der Molmasse des Weichsegments werden Materialien mit PADOH2000 als Weichsegment und PCL2000 als teilkristallinem Segment in Mikroansätzen hergestellt (Tab. 0.).

Tab. 0.6: Molmassen $M_n$ und $M_w$, Polydispersität PD bestimmt mittels GPC (vgl. Kap.) und Zusammensetzung der PCA-Polymere bestimmt mittels $^1$H-NMR-Spektroskopie mit PADOH2000 als amorphem Weichsegment und PCL2000 als teilkristallinem Hartsegment.

| Polymer | $\frac{M_n}{g \cdot mol^{-1}}$ | $\frac{M_w}{g \cdot mol^{-1}}$ | PD | $\frac{PCL}{Gew.-\%}$ | $\frac{PADOH}{Gew.-\%}$ | $\frac{TMDI}{Gew.-\%}$ |
|---|---|---|---|---|---|---|
| PCA(48,2,2) | 88600 | 279200 | 3,15 | 48 | 42 | 10 |
| PCA(69,2,2) | 62700 | 164100 | 2,62 | 69 | 21 | 10 |

Die erzielten Molmassen $M_w$ liegen zwischen 164000 $g \cdot mol^{-1}$ und 280000 $g \cdot mol^{-1}$ bei einer Polydispersität von 2,62 bis 3,15. Der erzielte Gewichtsanteil an PCL liegt bei 48 Gew.-% bzw. 69 Gew.-% mit einem PADOH2000-Anteil von 41 Gew.-% bzw. 21 Gew.-%. Das erzielte Verhältnis der Diole in den erhaltenen Polymeren entspricht etwa den eingesetzten Anteilen.

**Polymermischungen**

Hier werden Polymermischungen beschrieben, die einen thermisch induzierten Formgedächtniseffekt aufweisen. Dazu werden die oben beschriebenen Multiblockcopolymere (PDA- und PCA-Polymere) in unterschiedlichen Gewichtsanteilen miteinander gemischt. Dabei dient das in den PDA-Polymeren enthaltene kristallisierbare Segment PPDO als Hartsegment bildende Phase und die in den PCA-Polymeren enthaltenen kristallisierbaren PCL-Blöcke ($M_n$ 2000 $g \cdot mol^{-1}$) als Schaltsegment bildende Phase. Das in beiden Polymeren enthaltene dritte amorphe PADOH-Segment trägt zur Entropie-Elastizität der Polymermischungen bei. Im Gegensatz zu den als Formgedächtnispolymeren beschriebenen phasenseparierten Multiblockcopolymeren sind die beiden phasenbildenden Segmente in den Polymermischungen nicht kovalent miteinander verknüpft, da sie zu unterschiedlichen Multiblockcopolymeren gehören. Eine physikalische Verknüpfung kann über die dritte Phase, die amorphe PADOH-Phase erfolgen.

Es werden zwei Verfahren zur Herstellung der Polymermischungen vorgestellt. Dabei handelt es sich einerseits um die Copräzipitation aus Lösung und andererseits um die Coextrusion.

**Herstellung binärer Polymermischungen aus Lösung**

Zunächst werden die Eigenschaften der Polymermischungen vorgestellt, die aus Lösung der Polymere PDA und PCA aus den Makroansätzen hergestellt werden. Dabei soll zunächst auf die Herstellung und Bestimmung der Zusammensetzung, dann auf die thermischen und mechanischen Eigenschaften, anschließend auf die Formgedächtniseigenschaften eingegangen werden.

Herstellung binärer Polymermischungen aus Lösung und Bestimmung der Zusammensetzung

Zur Herstellung der Polymermischungen aus Lösung stehen drei PDA-Polymere und zwei PCA-Polymere mit PADOH1000 als amorphem Weichsegment zur Verfügung, von denen jeweils zwei miteinander zu binären Polymermischungen verarbeitet werden. Dadurch sind sechs verschiedene Mischungsreihen zugänglich, die in Tab. 0. aufgeführt werden.

Tab. 0.7: Übersicht über die möglichen binären Polymermischungen: Die einzelnen Mischungsreihen werden entsprechend den eingesetzten Multiblockcopolymeren benannt, mit PML: "Polymermischung aus Lösung".

| | PCA(47,2,1) | PCA(68,2,1) |
|---|---|---|
| PDA(42,1) | PML42/47 | PML42/68 |
| PDA(50,1) | PML50/47 | PML50/68 |
| PDA(64,1) | PML64/47 | PML64/68 |

Die Gewichtsverhältnisse der Polymermischungen variieren von 10:1 über 6:1, 4:1, 2:1, 1:1, 1:2 bis zu 1:4 Einwaage PDA-Polymer : Einwaage PCA-Polymer. Die Zusammensetzung der so hergestellten binären Polymermischungen wird mittels $^1$H-NMR-Spektroskopie ermittelt und mit der entsprechenden Einwaage verglichen. Die Zusammensetzung wird bestimmt, um eventuelle Verluste eines Polymers bei dem Lösungs- und dem anschließenden Fällungsschritt ausschließen zu können.

In ist ein Vergleich der entsprechenden Zusammensetzungen der binären Polymermischungen aus Lösung dargestellt. Die einzelnen Diagramme der Mischungsreihen sind nach dem Polymer aufgeteilt, welches das Makrodiol PPDO als teilkristallines Segment enthält: Diagramm A gibt die Polymermischungen wieder, die PDA(42) als eine Komponente enthalten, Diagramm B gibt die Polymermischungen wieder, die PDA(50) enthalten und Diagramm C stellt die Polymermischungen dar, die PDA(64) enthalten. Da jede PDA-Komponente mit zwei PCA-Polymeren gemischt wurde, sind in jedem Diagramm vier Mischungslinien aufgetragen, wobei zwei Linien der Zusammensetzung nach Einwaage und zwei Linien der $^1$H-NMR-spektroskopisch ermittelten Zusammensetzung entsprechen.

Formgedächtniseigenschaften der Polymermischungen aus Lösung

In diesem Kapitel werden die Formgedächtniseigenschaften der hergestellten Polymermischungen aus Lösung untersucht. Bei diesem System wird die permanente Form durch die Kristallite der PPDO-Segmente bestimmt, die als physikalische Vernetzungsstellen wirken. Als Schaltsegment bildende Phase dienen die PCL-Segmente, die eine Fixierung der temporären Form durch eine Kristallisation der Segmente ermöglichen. Der Unterschied zu den schon beschriebenen Polyetheresterurethanen mit Formgedächtniseffekt besteht zum einen darin, dass diese beiden phasenbildenden Segmente in den Polymermischungen nicht kovalent miteinander verknüpft sind, und zum anderen in der Anwesenheit einer dritten Komponente, dem amorphen PADOH. Diese trägt zur Entropie-Elasfizität der Polymermischungen bei. In Abb. ist der Formgedächtniseffekt in den Polymermischungen schematisch dargestellt. Dabei ist die Dehnung des Materials oberhalb $T_{trans}$ möglich, da die PCL-Segmente amorph vorliegen und beweglich sind. Bei der Dehnung werden sie orientiert und bei Abkühlen unter $T_{trans}$ kristallisieren diese Segmente, und die temporäre Form wird fixiert. Bei erneuter Erhöhung der Temperatur werden die Kristallite der PCL-Segmente wieder aufgeschmolzen und die Ketten nehmen eine geknäulte Konformation an. Die Probe kehrt in ihre permanente Form zurück (siehe Figur 3).

Die Formgedächtniseigenschaften der Polymermischungen werden mittels zyklischer thermomechanischer Experimente untersucht. Dabei wird insbesondere der Einfluss der Zusammensetzung der Polymermischungen auf die Formgedächtniseigenschaften gezeigt.

**Dehnungsgeregelte thermomechanische Testmethode**

Die Untersuchung der Formgedächtniseigenschaften erfolgt durch dehnungsgeregelte zyklische thermomechanische Experimente. Dabei wird die Probe bei einer Temperatur oberhalb der Schaltsegmentübergangstemperatur ($T_h$) auf eine vorgegebene maximale Dehnung ($\varepsilon_m$) verstreckt und eine bestimmte Zeit gehalten ($t_{ha}$). Anschließend wird das Material bei konstanter Dehnung mit der Abkühlrate $\beta_c$ auf eine Temperatur unterhalb der Schaltsegmentübergangstemperatur ($T_l$) abgekühlt. Dieser Zustand wird eine Zeit gehalten ($t_l$), um den verstreckten Zustand zu fixieren. Anschließend wird die Probe entspannt, die Klemmen der Materialprüfmaschine werden wieder in die Ausgangsposition gebracht. Durch Erwärmen der Probe auf $T_h$ und Halten über einen Zeitraum $t_{hb}$ wird die permanente Form der Probe wieder hergestellt; damit ist ein Zyklus abgeschlossen und kann von vorne beginnen. In Abb. 1 ist der typische Verlauf für ein dehnungsgeregeltes, zyklisches, thermomechanisches Zug-Dehnungsexperiment schematisch dargestellt.

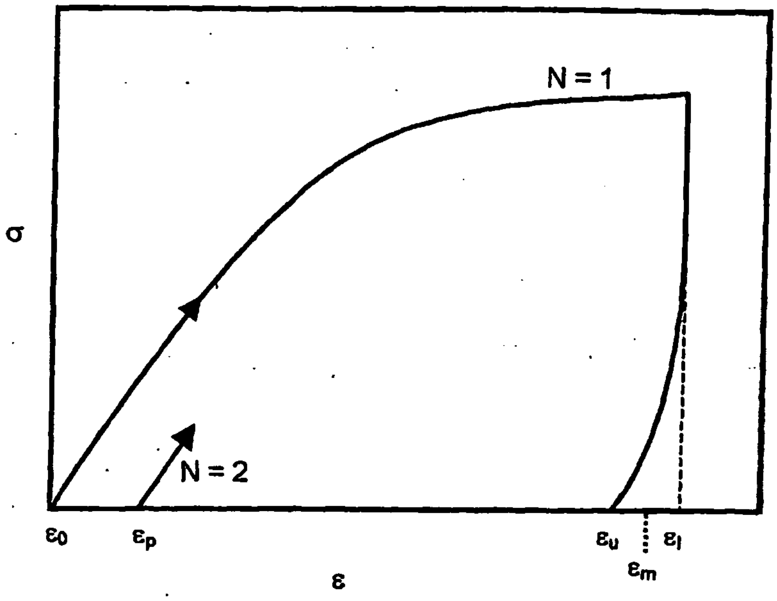


Abb..1: Schematische Darstellung eines dehnungsgeregelten zyklischen thermomechanischen Zug-Dehnungsexperimentes. Die Fixierung der Probe findet bei maximaler Dehnung $\varepsilon_m$ bei $T_l$ statt, die Wiederherstellung der Form im entspannten Zustand bei $T_h$.

Aus diesen Zyklen können wichtige Größen zur Quantifizierung der Formgedächtniseigenschaften ermittelt werden. So stellt der durch den Abkühlprozess fixierte Anteil der maximalen Dehnung $\varepsilon_u$ das Maß für die Fixierung im Zyklus N dar. Das Dehnungsfixierungsverhältnis $R_f$ (engl. *strain fixity rate*) lässt sich aus dem Verhältnis der Dehnung $\varepsilon_u$ der gedehnten, fixierten Probe und der realen maximalen Dehnung $\varepsilon_l$ bestimmen:

$$R_f(N) = \frac{\varepsilon_u(N)}{\varepsilon_l(N)} \cdot 100$$

Das Dehnungsrückstellungsverhältnis $R_r$ (engl. *strain recovery rate*) des Zyklus N wird aus der Dehnung $\varepsilon_l$ und $\varepsilon_p$ im Zyklus N und der Dehnung $\varepsilon_p$ der Probe im folgenden Zyklus berechnet. Dabei gilt für die Berechnung von $R_r(1)$, dass $\varepsilon_p(N-1)$ gleich null gesetzt wird.

$$R_r(N) = \frac{\varepsilon_l - \varepsilon_p(N)}{\varepsilon_l - \varepsilon_p(N-1)} \cdot 100$$

In Abb. 2 ist das Messprogramm des dehnungsgeregelten Zyklus schematisch dargestellt. Die gepunkteten Linien machen einen Wechsel der Temperatur von $T_h$ zu $T_l$ deutlich. Die vertikale Linie (- - -) beschreibt das Ende des ersten Zyklus. Daran schließt sich der nachfolgende Zyklus an.

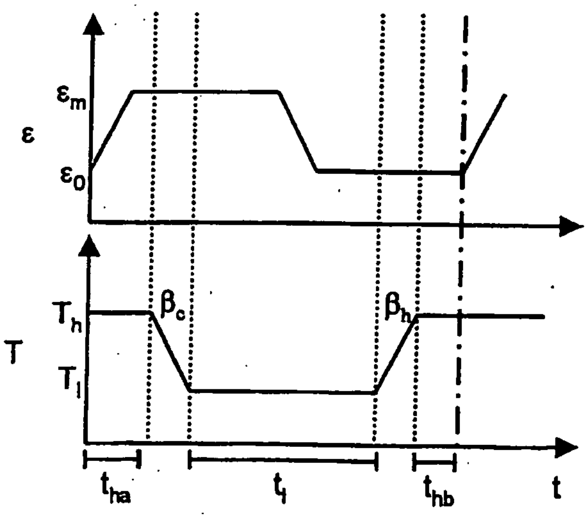


Abb.2: Schematische Darstellung des Prinzips des dehnungsgeregelten thermomechanischen Zyklus. Die Änderung der Temperatur von $T_h$ zu $T_l$ bzw. $T_l$ zu $T_h$ ist mit einer gepunkteten Linie (.....) angedeutet. Die letzte vertikale Linie (-·-·-) kennzeichnet das Ende des ersten Zyklus.

Die Standardparameter für den durchgeführten dehnungsgeregelten Zyklus sind, Kap. zu entnehmen. Die Haltezeiten bei $T > T_{trans}$ und $T < T_{trans}$ betragen 15 min. Es werden jeweils fünf Zyklen gemessen. Weitere Beobachtungen, die aus dem dehnungsgeregelten Zyklus zugänglich werden, sind das Relaxationsverhalten der Probe und die Änderung der Spannung bei Fixierung des Materials.

**Einfluss der Zusammensetzung**

Die Untersuchung der Formgedächtniseigenschaften in Abhängigkeit von der Zusammensetzung der binären Polymermischung aus Lösung wird bei den Materialien untersucht, die bei $T > T_{trans}$ eine Dehnung von 100 % zulassen. Betrachtet man die mechanischen Eigenschaften bei 50°C, so können die Polymermischungen, die PDA(64) enthalten, nicht untersucht werden, da deren Dehnbarkeit nicht ausreichend hoch ist. Abb. 3 stellt den typischen Verlauf eines Standardexperiments am Beispiel der Polymermischung PDA(50)/PCA(47)[22/28] dar. Gezeigt sind die Zyklen N = 1 und die nachfolgenden Zyklen N = 2 bis 5.

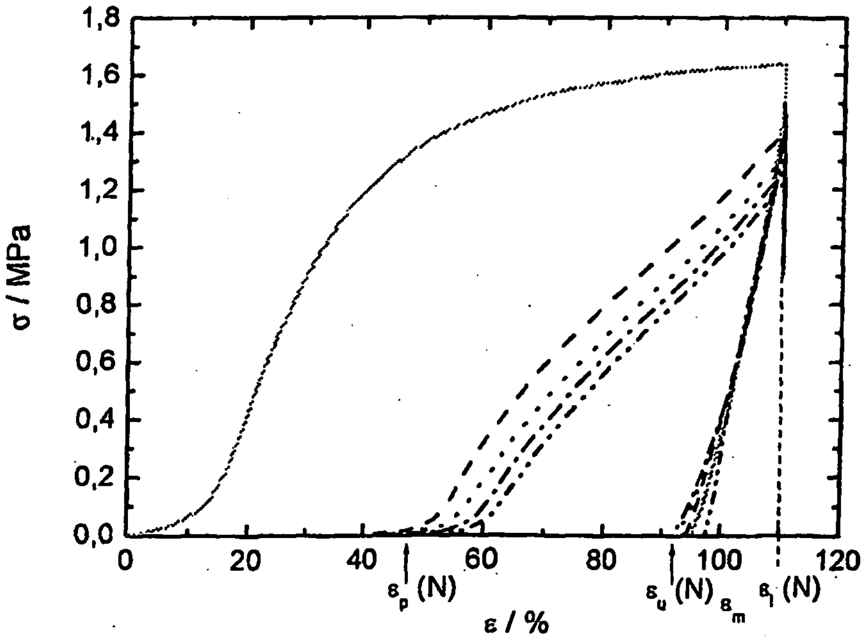


Abb. 3: Darstellung eines dehnungsgeregelten zyklischen thermomechanischen Zug-Dehnungsexperiments am Beispiel der Polymermischung PDA(50)/PCA(47)[22/28] bei $T_h$ = 50 °C, $T_l$ = 0 °C und $\varepsilon_m$ = 100 %.

Die erreichte reale Dehnung $\varepsilon_l$ liegt für alle Zyklen etwas oberhalb von $\varepsilon_m$. Auffällig ist, dass das Dehnungsrückstellungsverhältnis im ersten Zyklus nur etwa 64 % erreicht. Dies ist durch ein Fließen der amorphen Segmente oder durch plastische Verformung des Hartsegmentes zu erklären. Die Kurven der nachfolgenden Zyklen erreichen Werte für $R_r$ von mehr als 90 %. Dies zeigt, dass ein hohes Dehnungsrückstellungsverhältnis nur dann möglich ist, wenn das Material schon einmal verstreckt wurde. Weiterhin kann während T > $T_{trans}$ bei konstanter Dehnung und dem anschließenden Abkühlprozess eine Änderung der Spannung beobachtet werden. Zunächst nimmt diese ab, um anschließend wieder anzusteigen. Dieser Zusammenhang ist in Abb. 4 in Abhängigkeit von der Zeit dargestellt. Zusätzlich wird der Verlauf der Temperatur in Abhängigkeit von der Zeit dargestellt.

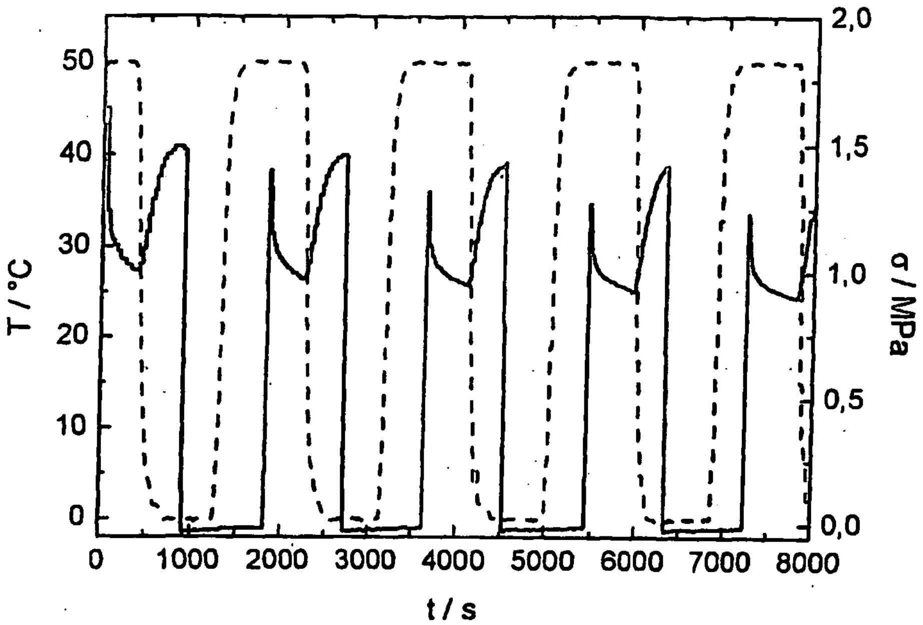


Abb. 4: Temperatur T (—) und Spannung σ (-) in Abhängigkeit von der Zeit während eines dehnungsgeregelten zyklischen thermomechanischen Zyklus am Beispiel der Polymermischung PDA(50)/PCA(47)[22/28].

Der Abfall der Spannung bei gleichbleibender Dehnung bei $T > T_{trans}$ ist auf eine Spannungsrelaxation zurückzuführen. Beim Abkühlen auf $T < T_{trans}$ steigt die Spannung wieder an. Dies wird auf die Kristallisation der das Schaltsegment bildenden Phase zurückgeführt.

In Tab. sind die experimentell erhaltenen Resultate aus den dehnungsgeregelten, thermomechanischen Zyklen zu finden. Dabei geben die Werte $R_f$(1-5) den Mittelwert aus allen Zyklen (N = 1-5), und $R_r$(2-4) den Mittelwert aus den Zyklen N = 2 bis N = 4 an. Alle Zyklen werden mit einer maximalen Dehnung $\varepsilon_m$ von 100 % durchgeführt.

Tab. 8: Formgedächtniseigenschaften der binären Polymermischungen aus Lösung in dehnungsgeregelten, zyklischen thermomechanischen Zug-Dehnungsexperimenten (vgl. Kap.). $R_f$(1-5) ist das durchschnittliche Dehnungsfixierungsverhältnis aus den Zyklen 1 bis 5, $R_r$(1), bzw. $R_r$(2) ist das Dehnungsrückstellungsverhältnis im 1. bzw. 2. Zyklus, $R_r$(2-4) ist das gemittelte Dehnungsrückstellungsverhältnis aus den Zyklen 2 bis 4.

| Polymermischung | $\frac{\varepsilon_m}{\%}$ | $\frac{R_f(1-5)}{\%}$ | $\frac{R_r(1)}{\%}$ | $\frac{R_r(2)}{\%}$ | $\frac{R_r(2-4)}{\%}$ |
|---|---|---|---|---|---|
| PDA(42)/PCA(47) [19/24] | 100 | 81,9 ± 0,8 | 80,3 | 97,1 | 97,3 ± 0,2 |
| PDA(42)/PCA(47) [26/16] | 100 | 68,1 ± 0,3 | 73,9 | 96,3 | 98,1 ± 1,6 |
| PDA(42)/PCA(47) [28/14] | 100 | 66,9 ± 1,0 | 84,7 | 96,8 | 98,9 ± 2,0 |
| PDA(42)/PCA(68) [13/48] | 100 | 93,7 ± 0,5 | 76,6 | 94,5 | 97,4 ± 3,9 |
| PDA(42)/PCA(68) [18/37] | 100 | 92,2 ± 0,3 | 73,3 | 96,6 | 98,6 ± 3,6 |

(fortgesetzt)

| Polymermischung | $\varepsilon_m$ / % | $R_f(1-5)$ / % | $R_r(1)$ / % | $R_r(2)$ / % | $R_r(2-4)$ / % |
|---|---|---|---|---|---|
| PDA(42)/PCA(68) [27/25] | 100 | 84,5 ± 0,3 | 72,8 | 97,2 | 98,2 ± 0,9 |
| PDA(42)/PCA(68) [28/16] | 100 | 72,8 ± 0,3 | 76,8 | 95,9 | 97,2 ± 1,6 |
| PDA(50)/PCA(47) [20/31] | 100 | 89,9 ± 1,6 | 62,1 | 87,7 | 90,6 ± 2,8 |
| PDA(50)/PCA(47) [22/28] | 100 | 85,4 ± 2,1 | 63,8 | 95,1 | 95,1 ± 3,0 |
| PDA(50)/PCA(47) [29/20] | 100 | 80,9 ± 0,3 | 55,0 | 91,0 | 94,6 ± 3,2 |
| PDA(50)/PCA(47) [43/11] | 100 | 77,8 ± 2,9 | 63,8 | 92,0 | 95,1 ± 3,0 |
| PDA(50)/PCA(68) [18/45] | 100 | 96,3 ± 0,8 | 58,6 | 95,7 | 94,6 ± 3,3 |
| PDA(50)/PCA(68) [28/32] | 100 | 90,8 ± 0,6 | 55,3 | 94,4 | 94,0 ± 1,5 |
| PDA(50)/PCA(68) [35/23] | 100 | 86,4 ± 1.1 | 57,1 | 91,8 | 96,5 ± 5,4 |
| PDA(50)/PCA(68) [40/15] | 100 | 79,7 ± 2,0 | 66,0 | 104,5 | 101,9 ± 12,1 |

Das Dehnungsfixierungsverhältnis der Proben steigt mit zunehmendem Anteil an Schaltsegment bildender Phase und liegt zwischen 67 % und 97 %.

Die Zunahme von $R_f$ mit steigendem Schaltsegmentgehalt ist dadurch bedingt, dass während des Abkühlens der Probe die Bildung der Kristallite zur Fixierung der temporären Form in zunehmendem Maß erfolgen kann. Bei einem höheren Anteil an Schaltsegment bestimmenden Blöcken ist eine höhere Kristallinität zu erwarten, so dass eine stärkere physikalische Vernetzung erfolgen kann und die temporäre Form besser fixiert wird.

$R_r$ liegt für den ersten Zyklus zwischen 55 % und 85 % und nimmt im zweiten Zyklus Werte von über 88 % an. Der Anstieg von $R_r$ nach dem ersten Zyklus ist vermutlich durch eine plastische Verformung der Segmente begründet. Es finden Relaxationsprozesse statt, bei denen physikalische Vernetzungsstellen gelöst werden und sich Kristallite der Hartsegment bildenden Phase in Richtung der einwirkenden Kraft orientieren. Erst nach ein- bis mehrmaliger Verstrekkung sind die Proben in einem Gleichgewicht und die Werte für $R_r$(2-4) nähern sich einem konstanten Wert von über 90 % an.

Es ist zu erwarten, dass $R_r$ mit steigendem PPDO-Gehalt zunimmt, da die permanente Form des Materials durch die physikalischen Vernetzungsstellen des Hartsegments gebildet wird. Im Rahmen der Messgenauigkeit ist fast kein Einfluss des PPDO-Gehalts auf $R_r$ zu erkennen. So liegen die Werte für $R_r$ der Polymermischung PML42/68 bei etwa 98 %, während für die weiteren Mischungsreihen ein leichter Anstieg von $R_r$ zu beobachten ist.

Für eine kommerzielle Herstellung von Polymermischungen bietet sich die Verarbeitung der Multiblockcopolymere zu Polymermischungen durch Extrusion an. Daher werden in diesem Abschnitt die Eigenschaften der binären Polymermischungen vorgestellt, die mittels Extrusion hergestellt werden. Dabei wird zunächst die Herstellung und Zusammensetzung erläutert, dann werden die thermischen Eigenschaften dargestellt, und im Anschluss an die mechanischen Eigenschaften werden die Formgedächtniseigenschaften untersucht.

Herstellung binärer Polymermischungen mittels Extrusion und Bestimmung der Zusammensetzung

Um die Polymere mittels Extrusion zu Mischungen verarbeiten zu können, werden zunächst die Flocken der reinen Multiblockcopolymere (PDA und PCA) extrudiert und der erhaltene Strang zu Granulat zerkleinert. Die Granulate der Multiblockcopolymere können dann in den gewählten Verhältnissen eingewogen und anschließend zu Polymermischungen extrudiert werden. Der erhaltene Strang der Polymermischung wird zur Gewährleistung einer homogenen Durchmischung erneut zu Granulat zerkleinert und ein zweites mal extrudiert.

Um die gleichmäßige Verteilung der einzelnen Komponenten zu überprüfen, wird die Zusammensetzung im

resultierenden Strang in Abhängigkeit von der Verweilzeit im Extruder während der zweiten Extrusion untersucht. Dazu wird exemplarisch eine Polymermischung ausgewählt und der Strang in Abschnitte unterteilt. Diese Abschnitte werden mittels $^{1}$H-NMR-Spektroskopie auf ihre Zusammensetzung hin untersucht. Der extrudierte Strang einer Polymermischung PDA(42)/PCA(68)[23/40] wird in gleichmäßige Abschnitte von 70 cm Länge unterteilt, und jedes Teilstück (T0 - T9) wird $^{1}$H-NMR-spektroskopisch untersucht (Abb. 5).

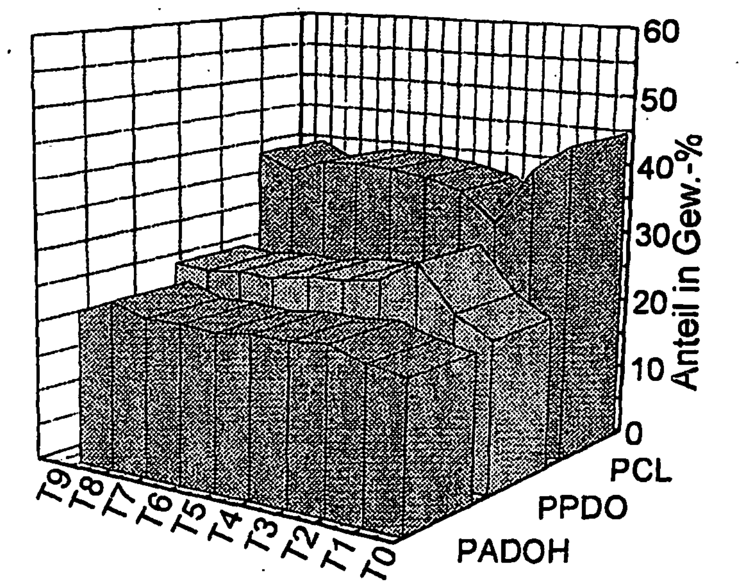


Abb. 5: **Zusammensetzung der extrudierten Polymermischung PDA(42)/PCA(68)[23/40] in Abhängigkeit von der Verweilzeit im Extruder während der zweiten Extrusion. T0 gibt die Zusammensetzung zu Beginn der 2. Extrusion wieder, T1 bis T8 beschreiben die Zusammensetzungen des Strangs in einem Abstand von 70 cm und T9 gibt die Zusammensetzung des Endes des letzten Strangstückes wieder.**

Zu Beginn der zweiten Extrusion schwanken die Anteile an PPDO und PCL. Der Anteil an PCL liegt zunächst hoch (45 Gew.-%) und sinkt auf 39 Gew.-% ab. Der Anteil an PPDO steigt von 21 Gew.-% auf 25 Gew.-%. Der Anteil an PADOH ändert sich von Beginn an nicht, nach dem Teilstück T4 nehmen auch die Anteile an PPDO und PCL konstante Werte an. Für die weitergehenden thermischen und mechanischen Charakterisierungen der Polymermischungen werden daher Teilstücke aus der Mitte des extrudierten Stranges gewählt.

Als Grundlage für die Auswahl der Zusammensetzungen der möglichen Polymermischungen dienen die Ergebnisse der binären Polymermischungen, die aus Lösung erhalten wurden. Aus der Vielzahl der möglichen Polymermischungen werden diejenigen ausgewählt, die eine Quantifizierung der Formgedächtniseigenschaften zulassen. Zusätzlich werden drei Mischungen aus dem Polymer PDA(64) in Kombination mit PCA(68) hergestellt. Die hergestellten Kombinationen sind in Tab. aufgeführt.

Tab. 9: Übersicht über die extrudierten binären Polymermischungen. Die einzelnen Mischungssysteme werden entsprechend der eingesetzten Multiblockcopolymere benannt, mit PME: "Polymermischung mittels Extrusion".

| | PCA(47,2,1) | PCA(68,2,1) |
|---|---|---|
| PDA(42,1) | PME42/47 | PME42/68 |
| PDA(50,1) | PME50/47 | PME50/68 |

(fortgesetzt)

| | PCA(47,2,1) | PCA(68,2,1) |
|---|---|---|
| PDA(64,1) | - | PME64/68 |

Die eingewogenen Verhältnisse der Polymergranulate variieren von 4:1 über 2:1, 1:1 und 1:2 Einwaage PDA-Polymer : Einwaage PCA-Polymer.

Formgedächtniseigenschaften der extrudierten Polymermischungen

In diesem Abschnitt werden die Formgedächtniseigenschaften der extrudierten Polymermischungen untersucht. Dabei werden zunächst die Ergebnisse der schon beschriebenen dehnungsgeregelten Standardzyklen diskutiert. Anschließend wird ein weiteres zyklisches, thermomechanisches Experiment vorgestellt, das es erlaubt, die Übergangstemperatur des Formgedächtniseffekts zu ermitteln. Der Mechanismus des Formgedächtniseffekts in diesem Polymersystem entspricht dem in Kap. erläuterten Mechanismus.

**Einfluss der Zusammensetzung der extrudierten Polymermischungen auf die Formgedächtniseigenschaften**

Die dehnungsgeregelten Standardzyklen werden mit den in oben angegebenen Parametern durchgeführt. Abb. gibt den typischen Verlauf eines dehnungsgeregelten, zyklischen, thermomechanischen Experiments für die extrudierte Polymermischung PDA(50)/PCA(68)[30/27] wieder.

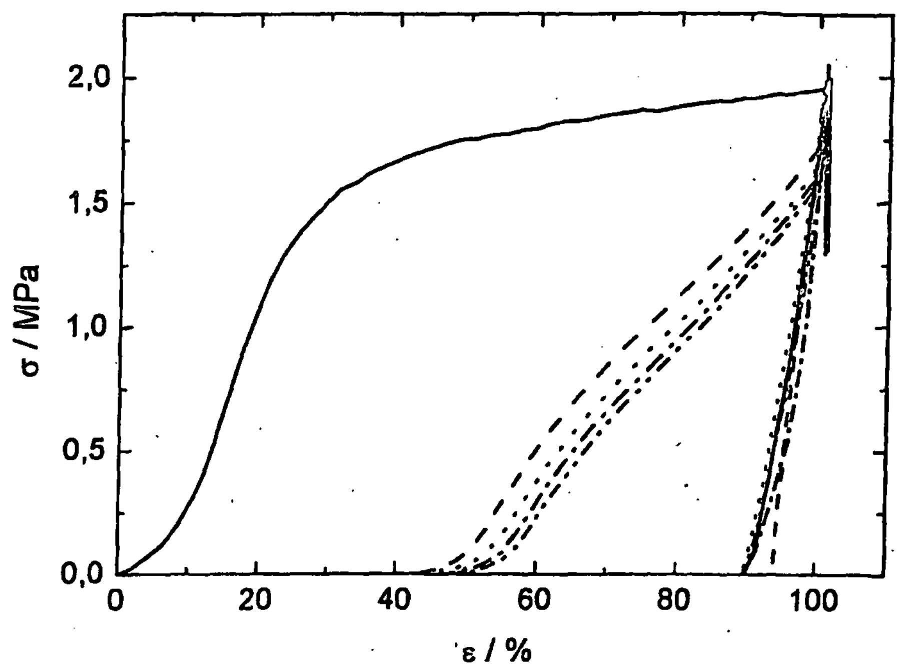


Abb. 6: Darstellung eines dehnungsgeregelten, zyklischen, thermomechanischen Zug-Dehnungsexperimentes am Beispiel der extrudierten Polymermischung PDA(50)/PCA(68)[30/27] mit $T_h$ = 50 °C, $T_l$ = 0 °C und $\varepsilon_m$ = 100 %.

Das Dehnungsrückstellungsverhältnis $R_r$ des ersten Zyklus beträgt etwa 60 %. Erst danach beträgt der Wert für $R_r$ 90 %. Analog zu dem in Kap. gezeigten Versuch, befindet sich die Probe erst nach dem ersten Verstrecken im Gleichgewicht, was durch eine plastische Verformung des Hartsegments verursacht wird. Die physikalischen Vernetzungsstellen werden durch Relaxationsprozesse gelöst und die Kristallite der Hartsegment bildenden Phase orientieren sich in Richtung der auf sie einwirkenden Kraft. Das Dehnungsfixierungsverhältnis $R_f$ liegt ab dem ersten Zyklus bei etwa 90 %. In Tab. sind die experimentell erhaltenen Resultate aus den dehnungsgeregelten, zyklischen, thermomechanischen Zyklen der extrudierten Polymermischungen zu finden. $R_f$(1-5) gibt den Mittelwert aus allen Zyklen (N = 1-5), und $R_r$(2-4) den Mittelwert aus den Zyklen N = 2 bis N = 4 an. Alle Zyklen werden mit einer maximalen Dehnung $\varepsilon_m$ von 100 % durchgeführt.

Tab. 10: Formgedächtniseigenschaften der binären, extrudierten Polymermischungen im dehnungsgeregelten thermomechanischen Standardexperiment (vgl. Kap.). $R_f$(1-5) ist das durchschnittliche Dehnungsfixierungsverhältnis aus den Zyklen 1 bis 5, $R_r$(1), bzw. $R_r$(2) ist das Dehnungsrückstellungsverhältnis im 1. bzw. 2. Zyklus, $R_r$(2-4) ist das gemittelte Dehnungsrückstellungsverhältnis aus den Zyklen N = 2 bis N=4.

| Polymermischung | $\frac{\varepsilon_m}{\%}$ | $\frac{R_f(1-5)}{\%}$ | $\frac{R_r(1)}{\%}$ | $\frac{R_r(2)}{\%}$ | $\frac{R_r(2-4)}{\%}$ |
|---|---|---|---|---|---|
| PDA(42)/PCA(47) [17/27] | 100 | 86,6 ± 0,5 | 63,8 | 91,7 | 95,2 ± 2,8 |
| PDA(42)/PCA(47) [24/18] | 100 | 75,8 ± 3,1 | 67,7 | 93,9 | 95,1 ± 1,3 |
| PDA(42)/PCA(47) [26/16] | 100 | 73,2 ± 2,7 | 70,1 | 92,8 | 95,2 + 2,1 |
| PDA(42)/PCA(68) [13/46] | 100 | 98,4 ± 0,4 | 59,5 | 82,2 | 84,0 ± 3,1 |
| PDA(42)/PCA(68) [17/42] | 100 | 95,7 ± 0,3 | 58,9 | 90,1 | 92,4 ± 2,0 |
| PDA(42)/PCA(68) [23/29] | 100 | 89,8 ± 1,2 | 68,2 | 92,2 | 96,1 ± 3,5 |
| PDA(42)/PCA(68) [29/19] | 100 | 87,4 ± 0,3 | 63,9 | 94,5 | 96,6 ± 3,0 |
| PDA(50)/PCA(47) [28/23] | 100 | 86,3 ± 5,1 | 62,5 | 96,2 | 96,6 ± 0,9 |
| PDA(50)/PCA(47) [29/21] | 100 | 79,6 ± 0,6 | 71,5 | 97,3 | 98,7 ± 3,6 |
| PDA(50)/PCA(47) [37/14] | 100 | 73,8 ± 5,4 | 67,7 | 93,9 | 95,8 ± 3,5 |
| PDA(50)/PCA(68) [10/49] | 100 | 99,1 ± 1,2 | 58,6 | 83,4 | 88,9 ± 4,8 |
| PDA(50)/PCA(68) [23/40] | 100 | 92,9 ± 0.1 | 61,6 | 93,6 | 95,0 ± 1,7 |
| PDA(50)/PCA(68) [30/27] | 100 | 89,7 ± 1,8 | 60,0 | 94,2 | 96,0 ± 2,3 |
| PDA(50)/PCA(68) [37/17] | 100 | 78,4 ± 2,8 | 64,4 | 94,1 | 97,6 ± 2,5 |

$R_r$ des ersten Zyklus $R_r$(1) liegt für alle Polymermischungen unterhalb des Dehnungsrückstellungsverhältnisses des zweiten Zyklus $R_r$(2). $R_r$ für den ersten Zyklus liegt zwischen 59 % und 70 %, das für den zweiten zwischen 82 % und 95 %. Die Werte von $R_r$ steigen innerhalb einer Mischungsreihe mit steigendem Hartsegmentanteil an.

Die leichte Zunahme von $R_r$ innerhalb der einzelnen Mischungsreihen bestätigt, dass das Hartsegment die permanente Form des Materials bestimmt. Je größer der Anteil an Hartsegment ist, desto höher ist der Anteil an physikalischen Vernetzungsstellen und damit die Wederherstellung des Materials.

Das Dehnungsfixierungsverhältnis der Materialien sollte vom Anteil an Schaltsegment abhängen; je höher dieser Anteil ist, desto besser sollte die Fixierung der temporären Form möglich sein.

Erwartungsgemäß nimmt $R_f$ mit steigendem Anteil an Schaltsegment bildenden Blöcken von 73 % auf 99 % zu. Die Fixierung der temporären Form findet durch die Kristallisation des Schaltsegments während des Abkühlvorgangs statt. Je größer der Schaltsegmentgehalt ist, desto höher ist die zu erwartende Kristallinität, die eine physikalische

Vernetzung des Materials bewirkt. So wird die Fixierung der temporären Form verbessert.

**Patentansprüche**

1. Polymermischung mit Form-Gedächtnis-Eigenschaft umfassend zwei unterschiedliche Blockcopolymere jeweils enthaltend mindestens ein Hartsegment und mindestens ein Weichsegment, wobei die beiden unterschiedlichen Blockcopolymere das gleiche Weichsegment umfassen und sich lediglich im Hinblick auf das Hartsegment unterscheiden, wobei die beiden Blockcopolymere selbst keine Form-Gedächtnis-Eigenschaften aufweisen.

2. Polymermischung nach Anspruch 1, wobei die Hart- und Weichsegmente ausgewählt sind unter Polyestersegmenten und Polyetherestersegmenten.

3. Polymermischung nach Anspruch 1 oder 2, wobei die Hart- und Weichsegmente durch Urethanbindungen miteinander verknüpft sind.

4. Polymermischung nach einem der Ansprüche 1 bis 3, wobei die Hart- und Weichsegmente nicht aromatisch sind.

5. Polymermischung nach einem der Ansprüche 1 bis 4, wobei das Weichsegment ausgewählt ist aus der Gruppe bestehend aus Copoly-epsilon-caprolacton-glykolid und Polyalkylenadipinat.

6. Polymermischung nach einem der Ansprüche 1 bis 5, wobei das Hartsegment ausgewählt ist unter Poly-p-dioxanon und Poly-epsilon-caprolacton.

7. Verfahren zur Herstellung einer Polymermischung nach einem der Ansprüche 1 bis 6, wobei die beiden Blockcopolymere entweder in Lösung miteinander vermischt werden, worauf die Mischung entweder durch Lösungsmittelverdampfung oder durch Ausfällung erhaltene wird, oder wobei die beiden Blockcopolymere in der Schmelze gemischt werden, bevorzugt unter Einsatz eines Extruders.

8. Mischung nach Anspruch 1, umfassend ein Blockcopolymer, umfassend mindestens ein Hartsegment und mindestens ein Weichsegment, wobei das Hartsegment ausgewählt Ist unter Poly-p-dioxanon und Poly-epsilon-caprolacton und wobei das Weichsegment ausgewählt ist unter Copoly-epsilon-caprolacton-glykolid und Polyalkylenadipinat.

9. Verwendung von zwei unterschiedlichen Copolymeren nach Anspruch 8 zur Herstellung von Polymermischungen nach einem der Ansprüche 1 bis 6.

10. Polymermischung mit Form-Gedächtnis-Eigenschaft nach Anspruch 1, umfassend zwei unterschiedliche Blockcopolymere, jeweils enthaltend mindestens ein Hartsegment und mindestens ein Weichsegment, wobei die Segmente der jeweiligen Blockcopolymere durch Urethansegmente miteinander verbunden sind.

**Claims**

1. Polymer blend with shape-memory characteristic comprising two different block copolymers each containing at least one hard segment and at least one soft segment, wherein the two different block copolymers comprise the same soft segment and only differ with regard to the hard segment, wherein the two block copolymers themselves have no shape-memory characteristics.

2. Polymer blend according to Claim 1, wherein the hard and soft segments are selected from polyester segments and polyetherester segments.

3. Polymer blend according to Claim 1 or 2, wherein the hard and soft segments are linked together by urethane bindings.

4. Polymer blend according to one of the Claims 1 to 3, wherein the hard and soft segments are not aromatic.

5. Polymer blend according to one of the Claims 1 to 4, wherein the soft segment is selected from the group consisting of copoly-epsilon-caprolactone glycolide and polyalkylene adipinate.

6. Polymer blend according to one of the Claims 1 to 5, wherein the hard segment is selected from poly-p-dioxanone and poly-epsilon-caprolactone.

7. Method for producing a polymer blend according to one of the Claims 1 to 7, wherein the two block copolymers are either mixed together in solution, whereupon the blend is obtained either by evaporation of the solvent or by precipitation, or wherein the two block copolymers are mixed in the melt, preferably by using an extruder.

8. Blend according to Claim 1, comprising a block copolymer, comprising at least one hard segment and at least one soft segment, wherein the hard segment is selected from poly-p-dioxanone and poly-epsilon-caprolactone and wherein the soft segment is selected from the group consisting of copoly-epsilon-caprolactone glycolide and polyalkylene adipinate.

9. Use of two different copolymers according to Claim 8 for the production of polymer blends according to one of the Claims 1 to 6.

10. Polymer blend with shape-memory characteristic according to Claim 1, comprising two different block copolymers, each containing at least one hard segment and at least one soft segment, wherein the segments of the respective block copolymers are linked together by urethane segments.

**Revendications**

1. Mélange de polymères à mémoire de propriété de forme comprenant deux copolymères séquencés différents contenant chacun au moins un segment dur et au moins un segment mou, dans lequel les deux copolymères séquencés différents comportent le même segment mou et diffèrent seulement au niveau du segment dur, les deux copolymères séquencés n'ayant en eux-mêmes pas de propriété de mémoire de forme.

2. Mélange de polymères selon la revendication 1, dans lequel les segments dur et mou sont choisis parmi des segments de polyester et des segments de polyétherester.

3. Mélange de polymères selon la revendication 1 ou 2, dans lequel les segments dur et mou sont combinés par des liaisons uréthane.

4. Mélange de polymères selon l'une des revendications 1 à 3, dans lequel les segments dur et mou ne sont pas aromatiques.

5. Mélange de polymères selon l'une des revendications 1 à 4, dans lequel le segment mou est choisi dans le groupe constitué par un copoly-epsilon-caprolactone-glycolide et un polyalkylène adipate.

6. Mélange de polymères selon l'une des revendications 1 à 5, dans lequel le segment dur est choisi parmi un poly (p-dioxanone) et un poly(epsilon caprolactone).

7. Procédé de préparation d'un mélange de polymères selon l'une des revendications 1 à 6, dans lequel les deux copolymères séquencés sont mélangés ensemble en solution, le mélange étant obtenu soit par évaporation du solvant soit par précipitation, ou dans lequel les deux copolymères séquencés sont mélangés ensemble dans le mélange à l'état fondu, de préférence en utilisant une extrudeuse.

8. Mélange selon la revendication 1, comprenant un copolymère séquencé, comprenant au moins un segment dur et au moins un segment mou, dans lequel le segment dur est choisi parmi un poly(p-dioxanone) et un poly(epsilon-caprolactone) et dans lequel le segment mou est choisi parmi un copoly-epsilon-caprolactone-glycolide et un polyalkylène adipate.

9. Utilisation de deux copolymères différents selon la revendication 8, pour la préparation de mélanges de polymères selon l'une des revendications 1 à 6.

10. Mélange de polymères à propriété de mémoire de forme selon la revendication 1, comprenant deux copolymères séquencés différents, contenant chacun au moins un segment dur et au moins un segment mou, dans lequel les segments des copolymères séquencés sont liés ensemble par des segments uréthane.

Figur 1

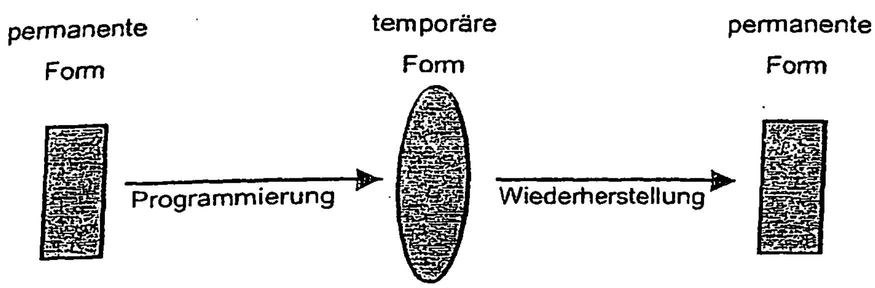


Schematische Darstellung des Formgedächtniseffekts. Ein Polymermaterial wird durch Programmierung aus der permanenten in die temporäre Form überführt. Durch einen externen Stimulus wird die permanente Form wieder hergestellt.

Figur 2

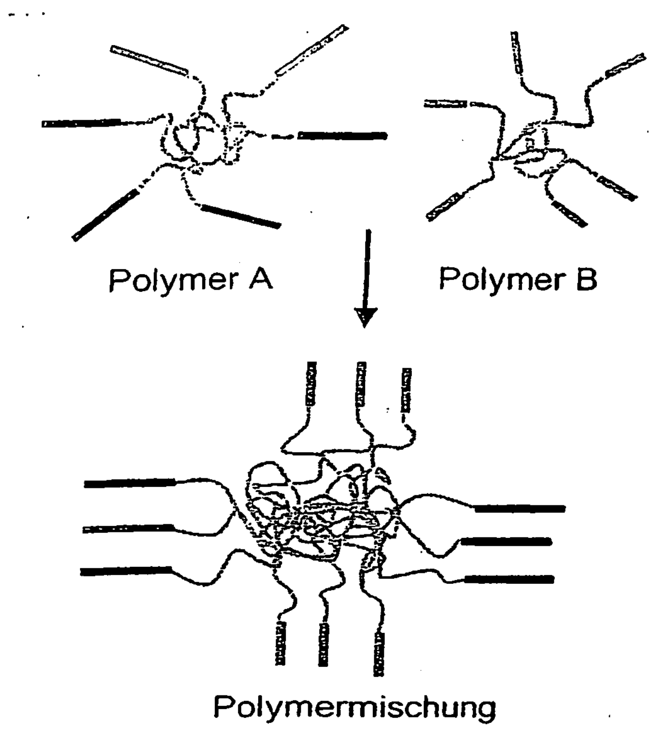


Schematische Darstellung der Polymermischungen mit thermisch induziertem Formgedächtniseffekt. Polymer A wird gebildet aus einem amorphen Weichsegment ( ) und einem teilkristallinem Hartsegment ( ) mit der Schmelztemperatur $T_{m1}$, Polymer B enthält das gleiche amorphe Weichsegment ( ) und ein teilkristallines Hartsegment ( ) mit $T_{m2} < T_{m1}$, das im Formgedächtniseffekt als Schaltsegment dient.

Figur 3

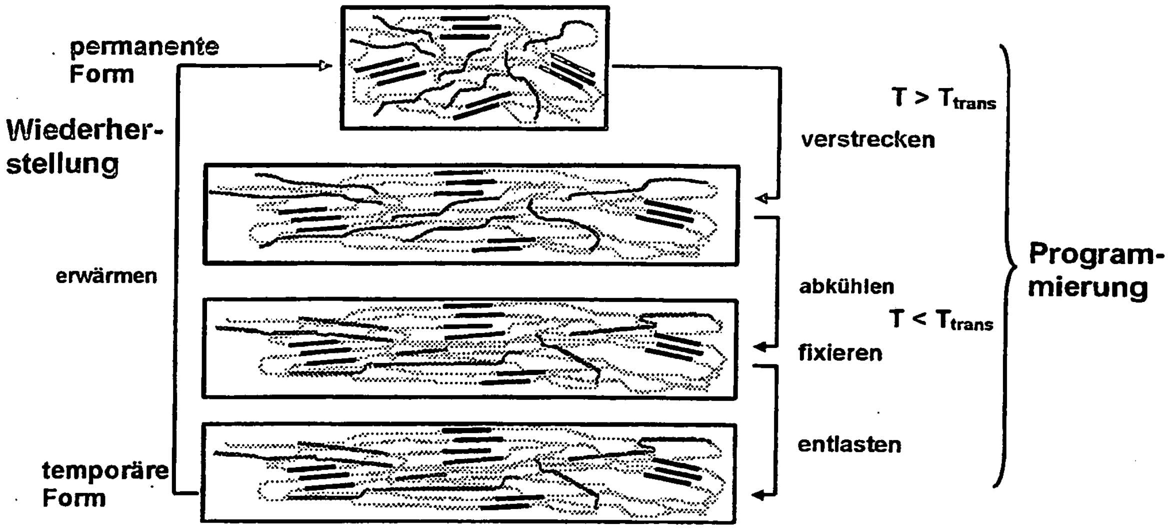


Schematische Darstellung des Formgedächtniseffekts der Polymermischungen; die Übergangstemperatur $T_{trans}$ ist die Schmelztemperatur $T_m$ des teilkristallinen Schaltsegmentes. Bei Temperaturen über $T_{trans}$ sind die Segmente weich und flexibel ( ) und das Material kann elastisch verformt werden. Wird die Temperatur unter $T_{trans}$ abgesenkt, so werden diese Segmente teilkristallin und steif ( ), die temporäre Form des Materials wird fixiert Zur permanenten physikalischen Vernetzung dient ( ), dessen $T_m$ oberhalb von $T_{trans}$ liegt. Die dritte Komponente, ( ) trägt zur Elastizität der Materialien bei.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9942147 A
- WO 9942528 A
- US 6388043 B1
- JP 11209595 A
- JP 2123129 A
- EP 1000958 A
- WO 0107499 A
- JP 4342762 A